# EUROPÄISCHE PATENTSCHRIFT

(11) **EP 3 282 230 B1**
(45) Veröffentlichungstag und Bekanntmachung des Hinweises auf die Patenterteilung: **05.02.2020**
(21) Anmeldenummer: 16202380.8
(22) Anmeldetag: 04.12.2014
(51) Int. Cl.: G01D 5/241

(54) **ABSOLUTER KAPAZITIVER WINKELENCODER**
ABSOLUTE CAPACITIVE ANGLE ENCODER
CODEUR ANGULAIRE ABSOLU CAPACITIF

(43) Veröffentlichungstag der Anmeldung: 14.02.2018
(62) Teilanmeldung aus: 14196332.2
(73) Patentinhaber: Hexagon Technology Center GmbH, 9435 Heerbrugg (CH)
(72) Erfinder: ROHNER, Marcel, CH-9410 Heiden (CH); BEDNAREK, Ingo, D-73734 Esslingen am Neckar (DE); BAUMANN, Lukas, CH-9000 St. Gallen (CH); WOHLGENANNT, Rainer, A-6833 Klaus (AT)
(74) Vertreter: Kaminski Harmann

(56) Entgegenhaltungen:
- WO-A1-02/21081
- WO-A1-2007/043962
- DE-A1-102011 105 898
- US-A- 6 054 851

## Beschreibung

Die Erfindung betrifft einen absoluten kapazitiven Winkelencoder gemäss der Ansprüche 1-8, ein Verfahren zum Bestimmen von Winkeln mit einem ebensolchen Winkelencoder nach Ansprüchen 9-13 und ein ebensolches Computerprogrammprodukt nach Anspruch 14.

Winkelencoder sind in verschiedensten Ausführungsformen seit vielen Jahren bekannt, z.B. aus der WO 02/21081 A1, US6054851, WO2007/043962 A1 oder US2013/0093439 A1

Sie finden im Maschinen- und Anlagenbau ebenso Anwendung wie in unterschiedlichsten Messgeräten, beispielsweise in geodätischen Geräten, Koordinatenmessgeräten, oder Robotern. Bei deren Anwendung stellt sich die Aufgabe den Stellungswinkel oder entsprechende, davon abgeleitete Grössen, wie beispielsweise Geschwindigkeit oder Beschleunigung, zwischen zwei gegeneinander rotierbaren Teilsystemen zu bestimmen.

Beispielsweise werden solche Winkelmesssysteme in Koordinatenmessgeräten wie z.B. Articulated Arms zur Ermittlung der Winkelpositionen in den einzelnen Gelenken verwendet, aus welchen in Folge die Raumposition eines am Ende des Arms angebrachten Tastelementes berechnet wird. Auch sind solche Winkelmesser in geodätischen Messgeräten, wie beispielsweise einem Theodoliten oder einer Totalstation verbaut, mit welchen verschiedenste Vermessungsaufgaben, wie beispielsweise die Bestimmung von Horizontal- und Vertikalwinkel, durchgeführt werden.

Ebenso sind solche Winkelencoder in Anlagen und Maschinen zu finden, um die Stellungen von Maschinenkomponenten wie Antrieben, Schwenkköpfen, Drosselklappen, Drehtischen, und Ähnlichem zu erfassen. Die dabei erfassten Stellungen können als Positionswerte zu Vermessungszwecken genutzt werden, oder auch für eine Positionierung von Komponenten durch einen Antrieb mit Positionsregelkreis.

Ein Winkelencoder weist zwei, in einem Freiheitsgrad um eine Messachse relativ zueinander bewegliche Einheiten, beispielsweise einer Statorscheibe und einer Rotorscheibe, auf. Die erste Einheit wird von einer an der zweiten Einheit angebrachten Abtasteinheit mittels eines Abtastsignals ganz oder teilweise abgetastet, wobei eine Information über die Winkelstellung der beiden Einheiten zueinander gewonnen wird. Zum Abtasten eignen sich prinzipiell unterschiedliche physikalische Wirkprinzipien, wie z.B. optisches oder kapazitives Abtasten. Dabei bieten kapazitive Winkelencoder gegenüber vergleichbaren optischen Winkelencodern den Vorteil einer geringeren Leistungsaufnahme und eines kostengünstigeren Aufbaus.

Es sind inkrementelle und absolute Winkelencoder bekannt. Nachteilig an Systemen mit inkrementellem Bestimmen von Winkeln ist, dass bei einem Neustart des Winkelmesssystems jedes Mal wieder von einer Null- bzw. Referenzstellung ausgegangen werden muss. Dagegen erzeugen absolute Winkelencoder für jede Relativlage der zueinander drehbaren Teilsysteme eindeutig unterscheidbare Abtastsignale. Dadurch kann einer jeweiligen Relativlage unmittelbar, d.h. ohne eine Referenz- bzw. Ausgangsstellung anzufahren, ein eindeutiger Winkel zugeordnet werden.

In der Praxis treten aufgrund von Fertigungstoleranzen, Montagetoleranzen oder Alterungserscheinungen Abweichungen von einer Ideallage bzw. Idealausrichtung der beiden gegeneinander rotierbaren Teilsysteme bzw. Einheiten des Winkelencoders zueinander auf, welche ohne entsprechende Kompensationsmassnahmen Fehler beim Bestimmen des Drehwinkels verursachen. Solche Abweichungen sind z.B. Exzentrizitäten der Rotor- und/oder Statorscheibe, Deformationen oder Verkippungen, welche z.B. zu ungleichmässigem Verlauf des axialen Abstands der Scheiben führen oder Ungenauigkeiten im Positionscode. Bei kapazitiven Winkelencodern führt dies u.a. zu Messfehlern aufgrund von unbeabsichtigten Änderungen der kapazitiven Kopplung zwischen der Statorscheibe und der Rotorscheibe. Neben den genannten sind weitere Fehlerquellen z.B. nichtideale Abtastsignale, Signalübersprechen oder externe Störsignale. Derartige Messfehler und damit einhergehende Beeinträchtigungen der Messgenauigkeit sind ein Grund, weshalb in Maschinen oder Messgeräten, bei denen Winkel mit hoher Präzision zu bestimmen sind, trotz der oben genannten höheren Leistungsaufnahme und Herstellungskosten in der Praxis optische gegenüber kapazitiven Winkelencodern bevorzugt werden.

Die US 6940278 B2 offenbart einen kapazitiven Winkelencoder mit einer Statoreinheit mit Emitterelektroden und einer Rotorscheibe mit kreisförmig angeordneten Receiverelektroden. Die Emitterelektroden werden mit Wechselspannung unterschiedlicher Phase angesteuert, so dass Wechselspannungssignale durch die kapazitive Kopplung in Abhängigkeit von der relativen Winkelstellung der Statoreinheit zur Rotorscheibe an Receiverelektroden übertragen werden, wodurch aus den von den Receiverelektroden empfangenen Signalen der Stellungswinkel bestimmbar ist. In einigen Ausführungsformen ist ein absolutes Bestimmen des Winkels ermöglicht. Hierzu weist der Winkelencoder eine zusätzliche kapazitive Einheit aus miteinander kapazitiv koppelnden Elektroden auf. Diese Elektroden werden derart angeordnet bzw. mit Wechselspannung angesteuert, dass der Winkel grob innerhalb des Vollkreises eindeutig bestimmbar ist, wodurch der höher aufgelöste inkrementelle Messwert absolut verortet werden kann. Zur Kompensation von fertigungsbedingten Fehlern, wie Exzentrizitäten, Verkippungen oder Fehlern in den Elektrodengeometrien, wird nach der US 6940278 B2 differentielles geometrisches Ausgleichen verwendet, mit dem Ziel, dass sich derartige Fehler durch Messsignale unterschiedlichen Vorzeichens gegenseitig aufheben. Hierzu weist der Winkelencoder beispielsweise eine weitere Statoreinheit auf, welche um 180° zur anderen Statoreinheit versetzt ist, oder die Statoreinheit wird zu einer Statorscheibe erweitert, welche einen Vollkreis von 360° abdeckt. Nachteilig am Winkelencoder nach der US 6940278 B2 ist, dass die Kompensation der genannten Fehler für hohe Präzisionsansprüche hinsichtlich der Winkelbestimmung nur unzureichend ist. Zudem ist nachteilig, dass weitere Fehlerquellen, welche prinzipiell durch differentielles Ausgleichen nicht kompensierbar sind, wie Deformationen der Stator- oder Rotorscheiben, nicht berücksichtigt werden, mit anderen Worten also nur ein geringer Teil des Fehlerspektrums kompensiert wird.

Die Aufgabe der vorliegenden Erfindung besteht daher in der Bereitstellung eines verbesserten absoluten kapazitiven Winkelencoders.

Eine weitere Aufgabe der vorliegenden Erfindung besteht in der Bereitstellung eines absoluten kapazitiven Winkelencoders mit verbesserter Fehlerselbstkompensation.

Eine weitere Aufgabe der vorliegenden Erfindung besteht in der Bereitstellung eines absoluten kapazitiven Winkelencoders, welcher sowohl niederfrequente als auch höher- und hochfrequente Anteile des Fehlerspektrums selbst kompensiert.

Eine weitere Aufgabe der vorliegenden Erfindung besteht in der Bereitstellung eines Verfahrens zum Bestimmen von Winkeln für einen solchen Winkelencoder.

Diese Aufgaben werden erfindungsgemäss durch die kennzeichnenden Merkmale der unabhängigen Ansprüche oder durch Merkmale der abhängigen Ansprüche gelöst bzw. diese Lösungen weitergebildet.

Die vorliegende Erfindung betrifft einen absoluten kapazitiver Winkelencoder. Der Winkelencoder weist als zwei in einem Freiheitsgrad um eine Messachse relativ zueinander bewegliche Einheiten eine erste Scheibe, z.B. eine Statorscheibe, und eine zweite Scheibe, z.B. eine Rotorscheibe, auf. Der Winkelencoder weist weiter einen ersten Sensorring auf mit einer Vielzahl von auf der ersten Scheibe kreisförmig angeordneten und radial ausgerichteten ersten Koppelelektroden, insbesondere Emitterelektroden, und einer Vielzahl von auf der zweiten Scheibe kreisförmig angeordneten und radial ausgerichteten zweiten Koppelelektroden, insbesondere Receiverelektroden. Neben dem ersten Sensorring weist der Winkelencoder erfindungsgemäss wenigstens einen zweiten Sensorring auf, wie der erste Sensorrings ebenfalls mit einer Vielzahl von auf der ersten Scheibe kreisförmig angeordneten und radial ausgerichteten ersten Koppelelektroden, insbesondere Emitterelektroden, und einer Vielzahl von auf der zweiten Scheibe kreisförmig angeordneten und radial ausgerichteten zweiten Koppelelektroden, insbesondere Receiverelektroden. Die zirkulare Breite der ersten und zweiten Koppelelektroden jedes Sensorringes ist aufeinander abgestimmt, wobei unter zirkularer Breite der Emitterelektroden bzw. Receiverelektroden die maximale oder gemittelte Ausdehnung in zirkularer Richtung verstanden wird.

Die erste Scheibe und die zweite Scheibe sind auf einer Messachse koaxial und beabstandet zueinander angeordnet und relativ zueinander um die Messachse rotierbar, wobei der Abstand der ersten Scheibe zur zweiten Scheibe derart bemessen ist, dass durch kapazitive Kopplung zeitlich sich ändernde Koppelsignale zwischen den ersten und zweiten Koppelelektroden eines jeweiligen Sensorrings übertragbar sind. Für eine differentielle Signalauswertung der zwischen den ersten und zweiten Koppelelektroden übertragenen Koppelsignale sind die zweiten Koppelelektroden vorzugsweise in zwei zueinander wechselseitige Sorten unterteilt d.h. jede zweite Koppelelektrode führt z.B. positive oder dazu inverse negative Koppelsignale. Dabei sind die jeweils übernächsten zweiten Koppelelektroden eines jeweiligen Sensorrings gleicher Sorte, mit anderen Worten sind die in zirkularer Richtung direkt benachbarten zweiten Koppelelektroden eines jeweiligen Sensorrings zueinander wechselseitig.

Die ersten Koppelelektroden eines jeweiligen Sensorrings weisen wenigstens drei definiert unterschiedliche Koppelsignalphasen auf. Die Koppelsignalphasen sind dabei signalseitig inkorporiert indem Koppelsignale verschiedener Phasen verwendet werden, oder mittels der Ausgestaltung bzw. Geometrie der ersten Koppelelektroden. Die Koppelsignalphasen sind versetzt zueinander, wobei der Versatz der Koppelsignalphasen zueinander bei Verwendung von vier Phasen vorzugsweise 90° bzw. ein Viertel der Phasenlänge beträgt.

Anhand der Anzahl der Koppelsignalphasen ist ein Alpha-Intervall definiert. Durch die Alpha-Intervalle ist bei jedem Sensorring eine Gliederung der ersten Koppelelektroden vorgegeben. Jeder Sensorring weist eine Anzahl von Alpha-Intervallen entlang des Sensorrings auf, so dass der erste Sensorring eine erste Alpha-Intervall-Gesamtzahl als die Anzahl aller Alpha-Intervalle entlang des ersten Sensorrings und der zweite Sensorring eine zweite Alpha-Intervall-Gesamtzahl die Anzahl aller Alpha-Intervalle entlang des zweiten Sensorrings aufweisen, wobei die erste und zweite Alpha-Intervall-Gesamtzahl grösser als Eins sind.

Um über den gesamten Messbereich, beispielsweise den Vollkreis, des Winkelencoders eine eindeutige, also absolute, Bestimmung von Winkeln anhand der beiden Sensorringe zu ermöglichen, sind die erste Alpha-Intervall-Gesamtzahl und die zweite Alpha-Intervall-Gesamtzahl zueinander teilerfremd. Jeder Sensorring weist also eine Vielzahl von ersten Koppelelektroden auf, deren Anordnung gemäss der Alpha-Intervalle entlang des jeweiligen Sensorrings gegliedert ist, wobei sich eine solchermassen gegliederte Abfolge der ersten Koppelelektroden entlang des jeweiligen Sensorrings wiederholt, so dass für sich genommen ein einzelner Sensorring nur für mehrdeutige, inkrementelle Winkelbestimmung geeignet ist. Durch die Kombination der hinsichtlich der Alpha-Intervall-Gesamtzahlen aufeinander abgestimmten Sensorringe werden jedoch erfindungsgemäss solche Mehrdeutigkeiten aufgehoben. Durch die Signalauswertung der zwischen den ersten und zweiten Koppelelektroden übertragenen Koppelsignale beider Sensorringe ist also ein Winkel absolut bestimmbar, so dass durch die vorliegende Erfindung ein absoluter kapazitiver Winkelencoder bereitgestellt wird.

Die Abfolge der ersten Koppelelektroden entlang des ersten Sensorrings ist durch eine erste Phasenpermutation definiert, so dass jeweils eine Reihe zirkular benachbarter erster Koppelelektroden des ersten Sensorrings ein erstes Phasenpermutationsintervall, im Folgenden kurz P-Intervall genannt, bilden und der erste Sensorring eine Anzahl M1 gleicher erster P-Intervalle aufweist. Dies gilt analog für den zweiten Sensorring: die Abfolge seiner ersten Koppelelektroden entlang des zweiten Sensorrings ist durch eine zweite Phasenpermutation definiert, so dass jeweils eine Reihe zirkular benachbarter zweiter Koppelelektroden ein zweites P-Intervall bilden und der zweite Sensorring eine Anzahl M2 gleicher zweiter P-Intervalle aufweist. Die Anzahlen M1 und M2 liegen je nach Ausführungsform typischerweise im ein- bis zweistelligen Bereich. Unter einer Phasenpermutation wird dabei, wie aus dem Stand der Technik, beispielsweise der US 6940278 B2, bekannt, das Prinzip verstanden, dass die Abfolge der ersten Koppelelektroden derart ist, dass im Vergleich zur einfachsten Möglichkeit der Phasenabfolge, bei der die jeweils zirkular direkt benachbarte erste Koppelelektrode die jeweils direkt nächste Koppelsignalphase aufweist, die Abfolge der Koppelsignalphasen über einen gewissen Abschnitt, welcher einem P-Intervall entspricht, geändert ist, unter Beibehaltung einer Gleichverteilung der Koppelsignalphasen über die gesamte Koppelelektrodenreihe. Eine solche Reihe alias P-Intervall wird entlang des Sensorrings dauernd wiederholt, wodurch die gesamten ersten Koppelelektroden eines Sensorrings in einer Anzahl von P-Intervallen angeordnet sind. Vorzugsweise weist ein jeweiliger Sensorring dabei vier zueinander versetzte Phasen auf. Die Anzahl der zweiten Koppelelektroden gleicher Sorte pro Sensorring ist optional abgestimmt auf die Anzahl der P-Intervalle, und zwar ist die Anzahl der zweiten Koppelelektroden gleicher Sorte ein Vielfaches im mathematischen Sinn der Anzahl M1 der ersten P-Intervalle bzw. ein Vielfaches der Anzahl M2 der zweiten P-Intervalle. Vorzugsweise ist die Anzahl der zweiten Koppelelektroden gleicher Sorte pro Sensorring gleich der Gesamtanzahl der Alpha-Intervalle des jeweiligen Sensorrings

In einer Fortbildung des erfindungsgemässen Winkelencoders werden die Koppelsignale der zweiten Koppelelektroden pro Sorte eines Sektors sektorweise zusammengeführt, wodurch der erste und/oder zweite Sensorring bezüglich der Koppelsignale in mindestens drei Sektoren, z.B. vier Sektoren (Quadranten) oder acht Sektoren, aufgeteilt ist. Die Sektoren verteilen sich über den gesamten Sensorring, d.h. der betreffende Sensorring ist bezüglich der Koppelsignale vollständig in Sektoren unterteilt. Die Auswertung der Koppelsignale erfolgt mit Vergleichen der zusammengeführten Koppelsignale von je wenigstens zwei Sektoren miteinander, wodurch Informationen über eine Abweichung der Anordnung der ersten und/oder zweiten Scheibe von einer Ideallage relativ zur Messachse ermittelbar sind. Optional sind die Sektoren gleichmässig verteilt und gleich gross und/oder ihre Anzahl ist gerade (also ein mathematisches Vielfaches von zwei) und/oder beträgt die Anzahl der Alpha-Intervalle ein Vielfaches der Anzahl der Sektoren und/oder beträgt die Anzahl zweiter Koppelelektroden ein Vielfaches der Anzahl der Sektoren.

In einer alternativen Ausführungsform weist der absolute kapazitive Winkelencoder erfindungsgemäss als zwei in einem Freiheitsgrad um eine Messachse relativ zueinander bewegliche Einheiten eine erste Scheibe, z.B. eine Statorscheibe, und eine zweite Scheibe, z.B. eine Rotorscheibe, auf und einen ersten und zweiten Sensorring, jeweils mit einer Vielzahl von auf der ersten Scheibe kreisförmig angeordneten und radial ausgerichteten ersten Koppelelektroden, insbesondere Emitterelektroden, und einer Vielzahl von auf der zweiten Scheibe kreisförmig angeordneten und radial ausgerichteten zweiten Koppelelektroden, insbesondere Receiverelektroden. Die zirkulare Breite der ersten und zweiten Koppelelektroden jedes Sensorrings ist aufeinander abgestimmt. Die erste Scheibe und die zweite Scheibe sind auf einer Messachse koaxial und beabstandet zueinander angeordnet und relativ zueinander um die Messachse rotierbar, wobei der Abstand der ersten Scheibe zur zweiten Scheibe derart bemessen ist, dass durch kapazitive Kopplung zeitlich sich ändernde Koppelsignale zwischen den ersten und zweiten Koppelelektroden eines jeweiligen Sensorrings übertragbar sind. Durch Signalauswertung der zwischen den ersten und zweiten Koppelelektroden übertragenen Koppelsignale des ersten und des zweiten Sensorrings, also beider Sensorringe, ist ein Winkel absolut bestimmbar. Für eine differentielle Signalauswertung der zwischen den ersten und zweiten Koppelelektroden übertragenen Koppelsignale sind die zweiten Koppelelektroden in zwei wechselseitige Sorten unterteilt d.h. z.B., dass jede zweite Koppelelektrode mit dem positiven oder negativen Eingang eines Analog-Digital-Konverters (ADC) unmittelbar oder mittelbar verbunden ist. Dabei sind die jeweils übernächsten zweiten Koppelelektroden eines jeweiligen Sensorrings gleicher Sorte.

Die ersten Koppelelektroden eines jeweiligen Sensorrings weisen in der genannten alternativen Ausführungsform wenigstens drei definiert unterschiedliche Koppelsignalphasen auf. Die Koppelsignalphasen sind dabei signalseitig inkorporiert oder mittels der Ausgestaltung bzw. Geometrie der ersten Koppelelektroden und versetzt zueinander, wobei der Versatz bei Verwendung von vier Phasen vorzugsweise 90° bzw. ein Viertel beträgt. Anhand der Anzahl der Koppelsignalphasen ist ein Alpha-Intervall definiert. Durch die Alpha-Intervalle ist bei jedem Sensorring eine Gliederung der ersten Koppelelektroden vorgegeben. Jeder Sensorring weist eine Anzahl von Alpha-Intervallen (entlang des Sensorrings) auf, so dass der erste Sensorring eine erste Alpha-Intervall-Gesamtzahl und der zweite Sensorring eine zweite Alpha-Intervall-Gesamtzahl aufweisen. Dabei kann die erste oder zweite Alpha-Intervall-Gesamtzahl Eins betragen, d.h. einer der beiden Sensorringe kann nur ein Alpha-Intervall aufweisen. Jeder Sensorring weist also eine Vielzahl von ersten Koppelelektroden auf, deren Anordnung gemäss der Alpha-Intervalle entlang des jeweiligen Sensorrings gegliedert ist, so dass anhand der Auswertung der Koppelsignale beider Sensorringe ein Winkel absolut bestimmbar ist. Die Koppelsignale der zweiten Koppelelektroden werden pro Sorte eines Sektors sektorweise zusammengeführt werden, wodurch der erste und/oder zweite Sensorring bezüglich der Koppelsignale in mindestens drei Sektoren, z.B. vier Sektoren (Quadranten) oder acht Sektoren, aufgeteilt ist. Die Sektoren verteilen sich über den gesamten Sensorring, d.h. der betreffende Sensorring ist bezüglich der Koppelsignale vollständig in Sektoren unterteilt. Die Auswertung der Koppelsignale erfolgt mit Vergleichen der zusammengeführten Koppelsignale von je wenigstens zwei Sektoren miteinander, wodurch Informationen über eine Abweichung der Anordnung der ersten und/oder zweiten Scheibe von einer Ideallage relativ zur Messachse bedingt sind. Optional sind die Sektoren gleichmässig verteilt und gleich gross, ist ihre Anzahl gerade (also ein mathematisches Vielfaches von zwei) und/oder beträgt die Anzahl der zweiten Koppelelektroden ein Vielfaches der Anzahl der Sektoren.

Als Alternative zur sektorweisen Zusammenführung von Koppelsignalen bei mindestens drei Sektoren weist der betreffende Sensorring bei allen Ausführungsformen mindestens drei Arten von ersten Koppelelektroden auf, welche jeweils wenigstens drei zueinander versetzte Koppelsignalphasen aufweisen, so dass insgesamt wenigstens neun verschiedene Koppelsignalphasen eingesetzt werden, wobei jeweils drei Phasen über je eine Art erster Koppelelektroden zusammenhängen.

Mittels der durch Vergleichen der zusammengeführten Koppelsignale ermittelten Informationen über eine Abweichung der Anordnung der ersten und/oder zweiten Scheibe von einer Ideallage relativ zur Messachse sind in einer Fortbildung eines erfindungsgemässen Winkelencoders Fehler kompensierbar, die durch die Abweichung der Anordnung der ersten und/oder zweiten Scheibe von einer Ideallage relativ zur Messachse bedingt sind. Bei diesen Fehlern handelt es sich besonders um solche geringer Frequenz, vor allem solche Fehler, die periodisch bezüglich einer Rotation um 360° sind. "Kompensieren" im Sinne der vorliegenden Erfindung ist als vollständige oder teilweise Kompensation zu verstehen. Alternativ oder zusätzlich ist mittels der Informationen über eine Abweichung der Anordnung der ersten und/oder zweiten Scheibe von einer Ideallage relativ zur Messachse die Abweichung der Anordnung der ersten und/oder zweiten Scheibe von einer Ideallage relativ zur Messachse bestimmbar.

Erster und zweiter Sensorring sind bei allen Ausführungsformen mittels der Abfolge der ersten Koppelelektroden des ersten Sensorrings und der Abfolge der ersten Koppelelektroden des zweiten Sensorrings optional aufeinander abgestimmt, dass sich Schwachstellen der beiden Sensorringe zumindest teilweise gegenseitig kompensieren. Mittels der Gestaltung der jeweiligen Abfolge der ersten Koppelelektroden werden also die Fehlerspektren des ersten und zweiten Sensorrings derart gezielt beeinflusst, dass zumindest abschnittsweise spektrale Anteile, die bei einem Sensorring stärker hervortreten, bei dem anderen Sensorring relativ schwach oder (annähernd) gleich Null sind. Somit sind durch die aufeinander abgestimmten Sensorringe vergleichsweise stark fehlerbehaftete Anteile des Fehlerspektrums des ersten Sensorrings durch vergleichsweise gering fehlerbehaftete korrespondierende Anteile des zweiten Sensors ausgleichbar und umgekehrt. Je nach Ausgestaltung bzw. Abstimmung der Sensorringe werden durch Signalauswertung der Koppelsignale des ersten Sensorrings Abschnitte des Fehlerspektrums des zweiten Sensorrings kompensiert und/oder umgekehrt, wobei vor allem höherfrequente und/oder hochfrequente Abschnitte der Fehlerspektren gegenseitig kompensiert werden. Zur Kompensation der Hauptlinien der jeweiligen Fehlerspektren sind optional die erste Alpha-Intervall-Gesamtzahl des ersten Sensorrings und die zweite Alpha-Intervall-Gesamtzahl des zweiten Sensorrings ungleich und auch alle Vielfachen der ersten Alpha-Intervall-Gesamtzahl ungleich aller Vielfachen der zweiten Alpha-Intervall-Gesamtzahl. Als weitere Option werden gewisse bzw. auftretende Nebenlinien der Fehlerspektren ebenfalls gegenseitig kompensiert. Weiter erfolgt optional die Abstimmung derart, dass das Fehlerspektrum des ersten Sensorrings orthogonal zum Fehlerspektrum des zweiten Sensorrings ist. Durch die Kombination von zwei oder mehr Sensorringen, die wie beschrieben aufeinander abgestimmt sind, ergibt sich erfindungsgemäss demnach ein Winkelencoder mit einem (Gesamt-)Fehlerspektrum mit selbstkompensierten Fehleranteilen.

Die vorliegende Erfindung ist nicht auf Ausführungsformen mit zwei Sensorringen beschränkt, sondern erfindungsgemässe Winkelencoder weisen optional drei oder mehr Sensorringe auf, wobei wenigstens zwei der Sensorringe sich derart unterscheiden, dass Winkel anhand der Signalauswertung der Sensorringe absolut bestimmbar sind. Hierzu sind die Sensorringe vorzugsweise derart unterschiedlich gestaltet, dass es keine Zahl gibt, welche die Alpha-Intervall-Gesamtzahlen aller Sensorringe teilt. Paarweise können Sensorringe dabei gemeinsame Teiler aufweisen. Die Abfolge der jeweiligen ersten Koppelelektroden sind derart aufeinander abgestimmt, dass sich die Schwachstellen in den Fehlerspektren der einzelnen Sensorringe gegenseitig kompensieren, z.B. dadurch, dass jede Fehlerspektrallinie in wenigstens einem Fehlerspektrum der Sensorringe eine schwach ausgebildete Amplitude bzw. im Optimalfall eine Amplitude gleich Null aufweist. Eine sektorweise Zusammenführung von Koppelsignalen erfolgt dabei bei wenigstens einem der Sensorringe, vorteilhaft bei demjenigen mit der z.B. aufgrund der höchsten Koppelelektrodenanzahl höchsten Auflösung, was in der Regel der äusserste Sensorring ist. Erfolgt die sektorweise Zusammenführung von Koppelsignalen bei mehreren Sensorringen, so ist es hinsichtlich der Fehlerkompensation oft von Vorteil, wenn die Aufteilung in Sektoren dergestalt ist, dass sich die Sektoren eines jeweiligen Sensorrings von denen eines anderen Sensorrings z.B. hinsichtlich ihrer Anzahl oder Winkelgrösse unterscheiden und/oder oder versetzt gegeneinander sind.

Die Koppelsignale der zweiten Koppelelektroden werden direkt an der ersten und zweiten Scheibe durch elektrische Kontakte angelegt bzw. abgegriffen. Als demgegenüber bevorzugte Alternative weist die zweite Scheibe für den ersten und zweiten Sensorring Überführungselektroden auf, welche mit Überführungselektroden der ersten Scheibe kapazitiv koppeln, wodurch die Koppelsignale zwischen der ersten und der zweiten Scheibe übermittelbar sind. Durch die Signalüberführungsmittel in Form von Überführungselektroden werden Koppelsignale von einer auf die andere Scheibe transferiert, so dass elektrische Kontakte zum Anlegen bzw. Abgreifen der Koppelsignale nur an einer der beiden Scheibe nötig sind. Die andere Scheibe, vorzugsweise die zweite Scheibe, weist nur interne elektrische Kontakte auf, z.B. solche zwischen den zweiten Koppelelektroden und den Überführungselektroden des jeweiligen Sensorrings, weswegen eine derartige Scheibe im Folgenden als passive Scheibe bezeichnet wird. Im Vergleich zu den oben genannten "aktiven" Scheiben mit Kontakten zum Koppelsignalabgriff bzw. -zufuhr sind durch eine passive Scheibe die Herstellung dieser und die elektrische Kontaktierung des Winkelencoders als Ganzes vereinfacht und damit kostengünstiger, da z.B. nur die statische, nichtrotierende Scheibe elektrisch zu kontaktieren ist. Eine passive zweite Scheibe weist pro Sensorring wenigstens eine Überführungselektrode pro Sorte der zweiten Koppelelektroden, d.h. mit wenigstens einer zweiten Koppelelektrode einer Sorte elektrisch leitend verbunden, auf. Entsprechend weist die erste Scheibe pro Sensorring pro Sorte wenigstens eine Überführungselektrode auf. Überführungselektroden gleicher Sorte und gleichen Sensorrings koppeln kapazitiv miteinander, wofür sie gleichen radialen Abstand zur Messachse aufweisen (beispielsweise bezogen auf die Mitte der Überführungselektroden). Bei gleichem radialem Abstand ist optional die radiale Ausdehnung (Erstreckung in radialer Richtung) der Überführungselektroden der ersten Scheibe unterschiedlicher zur radialen Ausdehnung der mit ihr koppelnden Überführungselektroden der zweiten Scheibe. Hierdurch wird die Robustheit gegenüber Exzentrizitäten der ersten und/oder zweiten Scheibe gesteigert, wobei vorzugsweise die Ausdehnung in radialer Richtung der Überführungselektroden der zweiten Scheibe geringer ist als die der ersten Scheibe.

Die sektorweise Zusammenführung von Koppelsignalen erfolgt in Ausführungsformen mit Überführungselektroden optional, indem die erste Scheibe bei einem in Sektoren aufgeteilten Sensorring pro Sektor eine Überführungselektrode pro Sorte der zweiten Koppelelektroden, also zwei Überführungselektroden aufweist. Die Überführungselektroden der einzelnen Sektoren sind getrennt voneinander. Mittels einer solchen Überführungselektrode, deren zirkulare Ausdehnung der zirkularen Ausdehnung des Sektors entspricht, werden alle Koppelsignale, die innerhalb eines Sektors auf diese Überführungselektrode überführt werden, zusammengefasst. Die Überführungselektroden der ersten oder zweiten Scheibe sind dabei jeweils mit einer einzelnen ersten bzw. zweiten Koppelelektrode verbunden oder je mit einer Sequenz zirkular benachbarter erster bzw. zweiter Koppelelektroden gleicher Sorte. Die zirkulare Ausdehnung einer jeden solchen Sequenz von zweiten Koppelelektroden auf der zweiten Scheibe muss nicht mit der zirkularen Ausdehnung eines Sektors übereinstimmen. Vielmehr entspricht diese hinsichtlich einer optimierten Kopplungssignalüberführung bevorzugt der zirkularen Ausdehnung einer Gruppe in zirkularer Richtung von nebeneinander liegenden Alpha-Intervallen des betreffenden Sensorrings auf der ersten Scheibe, vorzugsweise der zirkularen Ausdehnung eines P-Intervalls.

Bei Ausführungsformen mit aktiver zweiter Scheibe, also ohne Überführungselektroden, erfolgt die sektorweise Zusammenführung von Koppelsignalen optional, indem zweite Koppelelektroden gleicher Sorte eines jeweiligen Sektors auf der zweiten Scheibe elektrisch leitend verbunden sind. Die zusammengeführten Koppelsignale jedes Sektors können dann über die elektrische Verbindung abgegriffen werden.

Bei erfindungsgemässen Winkelencodern, bei denen sowohl die Koppelsignale gleicher Sorte des ersten als auch die Koppelsignale des zweiten Sensorrings jeweils sektorweise zusammengeführt sind, ist es vorteilhaft, wenn sich die Anzahl der Sektoren des ersten Sensorrings von der Anzahl der Sektoren des zweiten Sensorrings unterscheidet. Alternativ oder zusätzlich sind die Sektoren des ersten Sensorrings, z.B. um 30° oder 60°, versetzt zu den Sektoren des zweiten Sensorrings angeordnet, wodurch selbst bei gleicher Anzahl und Grösse der Sektoren unterschiedliche Bereiche der ersten bzw. zweiten Scheibe abgedeckt sind. Das Ausmass des Versatzes ist vorzugsweise angepasst an die Anzahl der Sektoren, beispielsweise beträgt er bei jeweils vier gleichgrossen Sektoren pro Sensorring 45°.

Als weiteres optionales Merkmal weist der Winkelencoder einen ersten und einen zweiten Signalwandler auf, z.B. einen ADC. Die ersten oder bevorzugt die zweiten Koppelelektroden sind unmittelbar oder mittelbar mit jeweils einem der beiden Signalwandler verbunden. Bei Sensorringen, die erfindungsgemäss eine Unterteilung hinsichtlich der Koppelsignale in Sektoren aufweisen, sind die ersten bzw. zweiten Koppelektroden sektorweise und sortenweise mit einem der beiden Signalwandler verbunden. D.h. dass an jedem Signalwandler die Koppelsignale wenigstens eines Sektors und einer Sorte anliegen. Weist der Winkelencoder bezüglich der Koppelsignale beispielsweise eine Unterteilung in drei Sektoren zu je 120° auf, so werden die Koppelsignale des ersten Sektors und der ersten Sorte zum ersten Signalwandler und die Koppelsignale des ersten Sektors und der zweiten Sorte zum zweiten Signalwandler geführt. Entsprechend werden die Koppelsignale der beiden anderen Sektoren zum ersten und zweiten Signalwandler geführt, wobei die Koppelsignale einer Sorte für alle Sektoren eines an den gleichen Signalwandler oder für unterschiedliche Sektoren an unterschiedliche Signalwandler geführt werden. Dabei ist optional die Belegung mittels Schalter, die der Winkelencoder aufweist, für jeden Sektor und jede Sorte der Koppelsignale bzw. zweiten Koppelektroden vom ersten zum zweiten Signalwandler und umgekehrt wechselbar, d.h. dass die Verbindung der zweiten Koppelektroden und Signalwandler sektorweise und sortenweise vertauschbar sind. Mit anderen Worten sind dann die zusammengeführten Koppelsignale der verschiedenen Sektoren und Sorten an unterschiedlichen Signalwandlern anlegbar und diese Belegung kann von einem Signalwandler zum anderen gewechselt werden. Durch eine solche wechselweise Belegung der Signalwandler mit den Koppelsignalen der einzelnen Sektoren wenigstens eines der beiden Sensorringe wird vorteilhaft eine Überwachung der Messachsen- bzw. Scheibenbewegung (engl.: axis monitoring) ermöglicht, z.B. hinsichtlich eines Taumelns oder exzentrischer Bewegungen.

Zur Robustheit gegenüber Exzentrizitäten der ersten und/oder zweiten Scheibe unterscheidet sich bei wenigstens einem Sensorring in einigen Ausführungsformen die radiale Erstreckung der ersten Koppelelektroden von der radialen Erstreckung der zweiten Koppelelektroden, die mit ihnen koppeln. Dadurch ist eine von exzentrischem Verhalten unbeeinflusste kapazitive Koppelung zwischen Receiverelektroden und Emitterelektroden gegeben, weshalb derartige Merkmale die weiter oben beschriebene Kompensation von, insbesondere niederfrequenten, Anteilen des Fehlerspektrums flankieren. Vorteilhaft ist dabei die radiale Erstreckung der zweiten Koppelelektroden grösser als diejenige der ersten Koppelelektroden.

Die ersten und/oder zweiten Koppelrelektroden sind für eine sinusartige Signalcharakteristik des Koppelsignals optional derart geformt, dass durch eine Rotation der ersten relativ zur zweiten Scheibe ein sinusförmiger Verlauf der kapazitiven Kopplung generiert wird. Als weitere Option sind direkt benachbarte erste Koppelelektroden radial gegensinnig zueinander ausgerichtet. Dabei sind diese derart unterschiedlich geformt, dass die durch die gegensinnige Ausrichtung und gegebenenfalls die Sinusform der ersten Koppelelektroden bedingte unterschiedliche radiale Lage direkt benachbarter erster Koppelelektroden kompensiert ist, wodurch gegebenenfalls exzentrizitäts- und/oder neigungsbedingte Störungen vermindert bzw. verhindert werden.

Zur Kompensation von Signalübersprechen, Minderung bzw. Abschirmung externer Störsignale und/oder Änderungen des Abstands zwischen ersten und zweiten Koppelelektroden und damit der kapazitiven Kopplung weisen einige Ausführungsformen wenigstens auf der ersten Scheibe wenigstens eine, vorzugsweise ringförmig ausgebildete, elektrisch abschirmende Schutzelektrode auf, welche die ersten Koppelelektroden vollständig oder teilweise umgibt. Zusätzlich weist optional die zweite Scheibe einen elektrisch abschirmenden Schutzelektrodenring auf zur Minderung externer Störsignale.

Durch die vorliegende Erfindung wird vorteilhaft ein kapazitiver Winkelencoder bereitgestellt, mit dem Winkel durch Kombination von zwei oder mehr aufeinander abgestimmten Sensorringen mit einer Vielzahl von ersten und zweiten Koppelelektroden absolut und präzise bestimmbar sind. Die Vorteile, die durch Verwendung von zeitlich sich ändernden Koppelsignalen und einer Vielzahl von Koppelelektroden gegeben sind, werden beim vorliegenden Winkelencoder bei allen Sensorringen genutzt. Durch den erfindungsgemässen Winkelencoder mit mindestens zwei Sensorringen ergibt sich der Vorteil von Präzisionssteigerungen bei der Winkelbestimmung bei gleichen Anforderungen an Herstellungs- bzw. Montagegenauigkeit bzw. bei gleich bleibender Präzision grössere Toleranzen bei Herstellung bzw. Montage wie bei absoluten kapazitiven Winkelencodern nach dem Stand der Technik. Durch Verwendung von aufeinander abgestimmten Sensorringen erfolgt im Fehlerspektrum des Winkelencoders als Ganzes vorteilhaft ein vollständiges Eliminieren oder zumindest teilweises Reduzieren von Fehleranteilen, die die Präzision der Winkelbestimmung andernfalls mindern würden. Ebenso erfolgt vorteilhaft ein Vermindern bzw. Kompensieren von Fehleranteilen durch die sektorweise Zusammenführung von Koppelsignalen und durch ein Auswerten der Koppelsignale auch hinsichtlich der Koppelsignalamplituden. Durch diese Merkmale ergeben sich Präzisionssteigerungen bzw. grössere Fertigungs-/Montagetoleranzen und damit Kostenvorteile.

Vorteilhaft werden somit bei einem erfindungsgemässen Winkelencoder sowohl nieder- als auch höher- und hochfrequente Anteile des Fehlerspektrums kompensiert, also eine sehr grosse Bandbreite von Messfehlern berücksichtigt, wodurch die vorliegende Erfindung eine "ganzheitliche" Kompensation von Fehlern beim Bestimmen von Winkeln bereitstellt, was die Messgenauigkeit des vorliegenden Winkelencoders gegenüber Winkelencodern nach dem Stand der Technik deutlich verbessert. Es ist besonders von Vorteil, dass durch den erfindungsgemässen Winkelencoder mit der Kombination von zwei oder mehr erfindungsgemässen Sensorringen eine verbesserte Selbstkompensation im Vergleich zu absoluten kapazitiven Winkelencodern nach dem Stand der Technik erfolgt. Hierdurch ist eine hochgenaue Kompensation von Fehlern auch ohne eine hochgenaue externe Referenz gegeben, wobei u.a. der Vorteil erreicht wird, dass eine Fehlerkompensation nach Montage des Winkelencoders unter relativ geringem Zeit- und Kostenaufwand beim Anwender erfolgen kann. Für eine Selbstkompensation bzw. Selbstkalibrierung des erfindungsgemässen Winkelencoders wird einmal eine Relativbewegung der ersten zur zweiten Scheibe über wenigstens den gesamten Vollkreis, also 360°, durchgeführt, wodurch alle kompensierbaren Fehleranteile kompensiert bzw. alle Fehlerparameter bestimmt sind. Sind einige Fehlerparameter vorab bekannt bzw. invariant oder brauchen nicht kompensiert zu werden, was z.B. bei Winkelencodern der Fall ist, mit denen Winkel innerhalb einer Relativbewegung von weniger als 360° zu bestimmen sind, wie z.B. in Roboterarmen oder Articulated Arms mit beschränktem Drehbereich, ist entsprechend zur Selbstkompensation eine Rotation um weniger als 360° ausreichend.

Die vorliegende Erfindung betrifft ausserdem ein Verfahren zum Bestimmen von Winkeln für einen erfindungsgemässen Winkelencoder. Im Rahmen des Verfahrens werden die ersten oder zweiten Koppelelektroden eines jeweiligen Sensorrings mit zeitlich sich ändernden Koppelsignalen angesteuert. Mittels kapazitiver Kopplung werden Koppelsignale zwischen den ersten und zweiten Koppelelektroden übertragen, wobei das Übertragen von der Relativlage der ersten und zweiten Koppelelektroden zueinander bzw. der ersten zur zweiten Scheibe die Koppelsignale abhängig ist. Mittels Signalauswerten der zwischen den ersten und zweiten Koppelelektroden übertragenen Koppelsignale ist somit ein Winkel bestimmbar, wobei das Signalauswerten differentiell erfolgt, wodurch u.a. externe Störsignale eliminiert werden. Der zu bestimmende Winkel ist jeweils für jeden Sensorring für sich genommen anhand der Koppelsignale des ersten Sensorrings als auch anhand der Koppelsignale des zweiten Sensorrings mehrdeutig bestimmbar. Diese Mehrdeutigkeiten werden mittels Auswerten der Koppelsignale beider Sensorringe, also sowohl des ersten als auch des zweiten Sensorrings, aufgelöst, weshalb mit dem erfindungsgemässen Verfahren Winkel absolut bestimmt werden. Die Mehrdeutigkeiten sind insbesondere aufgrund der Teilerfremdheit der ersten Alpha-Intervall-Gesamtzahl und der zweiten Alpha-Intervall-Gesamtzahl zueinander auflösbar.

Optional werden als Teil des erfindungsgemässen Verfahrens Fehler kompensiert, indem bei Ausführungsformen erfindungsgemässer Winkelencoder, bei den Koppelsignale der zweiten Koppelelektroden sektorweise zusammengeführt sind, ein vergleichendes Auswerten von Koppelsignalen unterschiedlicher Sektoren erfolgt. Damit lassen sich vor allem niederfrequente Fehler kompensieren, welche durch Abweichung der Anordnung der ersten und/oder zweiten Scheibe von einer Ideallage relativ zur Messachse bedingt sind. Alternativ oder zusätzlich erfolgt ein Bestimmen der Abweichung der Anordnung der ersten und/oder zweiten Scheibe von einer Ideallage relativ zur Messachse. Als weitere Option erfolgt bei derartigen Ausführungsformen das Auslesen der Koppelsignale eines jeden Sektors separat. Das separate Auslesen erfolgt, indem die zusammengeführten Koppelsignale der Receiverelektroden eines jeden Sektors an einen separaten Signalwandler, insbesondere einen Analog-Digital-Konverter, angelegt werden. Alternativ erfolgt das separate Auslesen, indem die zusammengeführten Koppelsignale der zweiten Koppelelektroden verschiedener Sektoren mittels eines Zeitmultiplexverfahrens zeitlich versetzt an einen gemeinsamen Signalwandler, insbesondere einen Analog-Digital-Konverter, angelegt werden. Letzte Alternative bietet den Vorteil, dass mit vergleichsweise wenigen Signalwandlern ein separates Auslesen ermöglicht ist.

Als weitere Option erfolgt mittels Zeitmultiplexverfahrens das Ansteuern der Koppelelektroden eines jeweiligen Sensorrings mit zeitlich sich ändernden Koppelsignalen für unterschiedliche Koppelsignalphasen zeitlich versetzt zueinander, so dass zeitlich sich ändernde Koppelsignale unterschiedlicher Phasen zu unterschiedlichen Zeiten anliegen. Als weitere Option werden die signalemittierenden Koppelelektroden des ersten Sensorrings mittels eines Zeitmultiplexverfahrens zeitlich versetzt zu denjenigen des zweiten Sensorrings angesteuert.

Als weitere Option werden die Amplituden der Koppelsignale bei deren Auswerten berücksichtigt. Dadurch werden Abweichungen der Formen oder Lagen auf den Scheiben der ersten und/oder zweiten Koppelelektroden von Idealformen bzw. Ideallagen kompensiert, wodurch vorteilhaft weitere Präzisionssteigerungen bzw. grössere Fertigungstoleranzen als bei Winkelencodern nach dem Stand der Technik erreicht werden.

Die vorliegende Erfindung beinhaltet des Weiteren ein Computerprogrammprodukt oder Computer-Datensignal, verkörpert durch eine elektromagnetische Welle, mit Programmcode, zur Steuerung bzw. Durchführung des Verfahrens zum Bestimmen von Winkeln.

Der erfindungsgemässe absolute kapazitive Winkelencoder sowie das erfindungsgemässe Verfahren zum Bestimmen von Winkeln werden nachfolgend anhand von in der Zeichnung schematisch dargestellten Ausführungsbeispielen rein beispielhaft näher beschrieben.

Im Einzelnen zeigen
- Fig.1: schematisch eine erste Ausführungsform eines erfindungsgemässen Winkelencoders,
- Fig.2a-c: schematische Beispiele für die Ausgestaltung und Anordnung der Receiverelektroden und Emitterelektroden und deren Ansteuerung mit zeitlich sich ändernden Koppelsignalen,
- Fig.3: ein schematisches Beispiel für definierte Abfolgen von Emitterelektroden eines ersten und zweiten Sensorrings,
- Fig.4a,b: Beispiele für Fehlerspektren eines Winkelencoders mit aufeinander abgestimmten Sensorringen,
- Fig.5: ein schematisches Beispiel für einen Ausschnitt aus einer Ausführungsform mit Überführungselektroden und Sektoren zur sektorweiser Zusammenführung von Koppelsignalen,
- Fig.6: eine beispielhafte Tabelle für Belegungszustände eines Winkelencoders mit vier Sektoren,
- Fig.7: schematisch eine zweite Ausführungsform eines erfindungsgemässen Winkelencoders mit Signalüberführungsmitteln und
- Fig.8a,b: Beispiele für ein Fehlerspektrum eines Winkelencoders nach Fig. 7 vor und nach Fehlerselbstkompensation.

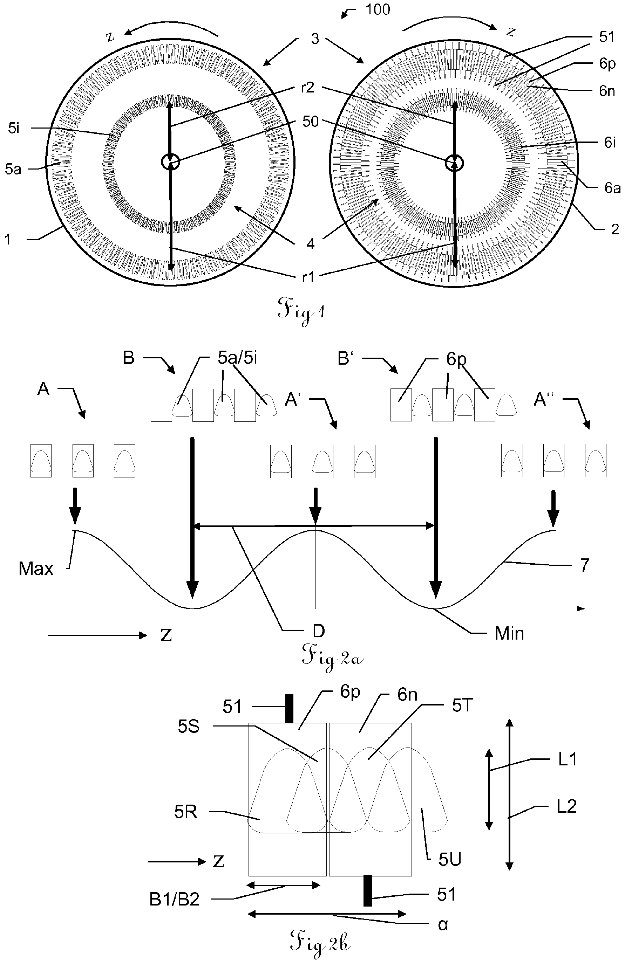

Fig.1 zeigt einen erfindungsgemässen Winkelencoder 100 mit einer ersten Scheibe 1, im Folgenden als Stator 1 bezeichnet, und einer zweiten Scheibe 2, im Folgenden als Rotor 2 bezeichnet. Stator 1 und Rotor 2 sind auf einer Messachse 50 koaxial und mit einem Abstand zueinander angeordnet und können relativ zueinander um die Messachse 50 rotieren. In der Darstellung nach Fig. 1 ist der Winkelencoder jedoch zur besseren Übersichtlichkeit "aufgeklappt", d.h. Stator 1 und Rotor 2 liegen beide in der Zeichenebene, wodurch die sich gegenüberstehenden Flächen der Scheiben 1 und 2 sichtbar sind. Der Winkelencoder 100 weist einen ersten Sensorring 3 auf mit einer Vielzahl von ersten Koppelelektroden 5a, welche im Beispiel ausgebildet sind als Emitterelektroden, die auf dem Stator 1 kreisförmig angeordnet sind, und einer Vielzahl von zweiten Koppelelektroden 6a, im Beispiel ausgebildet als Receiverelektroden, welche auf dem Rotor 2 kreisförmig angeordnet sind. Weiter weist der Winkelencoder 100 einen zweiten Sensorring 4 auf, ebenfalls mit einer Vielzahl von ersten Koppelelektroden 5i, ausgebildet als Emitterelektroden, welche auf dem Stator 1 kreisförmig angeordnet sind, und einer Vielzahl von zweiten Koppelelektroden 6i, ausgebildet als Receiverelektroden, welche auf dem Rotor 2 kreisförmig angeordnet sind. Die ersten und zweiten Koppelelektroden 5a, 5i, 6a und 6i weisen eine radiale Ausrichtung auf, d.h. ihre Längsachse zeigt auf die Messachse 50. Die jeweils durch die Emitterelektroden 5a und Receiverelektroden 6a gebildeten kreisförmigen Strukturen des ersten Sensorrings und die aus den Emitterelektroden 5i und den Receiverelektroden 6i des zweiten Sensorrings gebildeten kreisförmigen Strukturen sind jeweils konzentrisch zueinander und zur Messachse 50. Die ersten und zweiten Koppelelektroden 5a bzw. 6a des äusseren Sensorrings weisen den Abstand r1 zur Messachse 50 auf, die ersten und zweiten Koppelelektroden 5i bzw. 6i des inneren Sensorrings den Abstand r2 zur Messachse 50, immer bezogen z.B. auf den Mittelpunkt einer jeweiligen Elektrode. Durch den jeweils gleichen Abstand r1 bzw. r2 zur Messachse 50 und den Abstand des Stators 1 zum Rotor 2 koppeln die äusseren Emitterelektroden 5a mit den Receiverelektroden 6a kapazitiv und entsprechend die inneren Emitterelektroden 5i mit den inneren Receiverelektroden 6i. Die Abfolge bzw. Anordnung der Emitterelektroden 5a des ersten Sensorrings und die Abfolge bzw. Anordnung der Emitterelektroden 5i des zweiten Sensorrings sind, insbesondere mittels einer weiter unten näher beschriebenen ersten und zweiten Phasenpermutation, derart aufeinander abgestimmt, dass anhand des ersten Sensorrings 3 und des zweiten Sensorrings 4 die Winkelbestimmung absolut erfolgt. Mit anderen Worten liegt durch die Kombination des ersten Sensorrings 3 mit dem zweiten Sensorring 4 ein absoluter Winkelencoder 100 vor.

Die Receiverelektroden 5a bzw. 5i eines jeden Sensorrings 3 bzw. 4 sind unterteilt in zwei zueinander wechselseitige Sorten (z.B. positiv und negativ) z.B. die Receiverelektrode 6p und die Receiverelektrode 6n des äusseren Sensorrings 3, so dass ein differentielles Auswerten von von den Receiverelektroden 6a bzw. 6i mittels kapazitivem Wirkungsprinzip empfangenen Koppelsignalen ermöglicht ist. Dabei sind jeweils in zirkularer Richtung z, also entlang der gedachten Kreislinie, übernächste Receiverelektroden 6a bzw. 6i jeden Sensorrings gleicher Sorte, anders formuliert sind zirkular direkt benachbarte Receiverelektroden 6a bzw. 6i unterschiedlicher Sorte. Wie dargestellt werden vorzugsweise alle Receiverelektroden 6a bzw. 6i einer Sorte am weiter aussen gelegenen Ende durch Kontakte 51 elektrisch kontaktiert, alle Receiverelektroden 6a bzw. 6i der anderen Sorte durch Kontakte 51 am weiter inneren gelegenen Ende. Die Fläche zur kapazitiven Kopplung der Receiverelektroden ist dabei bei beiden Sorten gleich gross.

Fig. 2a zeigt schematisch ein Beispiel für die Ausgestaltung der ersten bzw. zweiten Koppelelektroden des ersten bzw. zweiten Sensorrings. Dargestellt sind als Ausschnitt aus dem Stator in fünf verschiedenen Relativlagen A, A', A", B und B' von Stator zu Rotor jeweils drei Emitterelektroden 5a bzw. 5i gleicher Koppelsignalphase eines Sensorrings als Ausschnitt aus dem Stator und zeichnerisch überdeckend jeweils drei rechteckförmige Receiverelektroden 6p einer Sorte des gleichen Sensorrings als Ausschnitt aus dem Rotor. Für eine bessere Übersichtlichkeit ist in Fig. 2a wie auch in den nachfolgenden Fig. 2b-3a die Kreiskrümmung entlang der zirkularen Kreislinienrichtung z in der Zeichnung unberücksichtigt. Zudem sind der Einfachheit halber in Fig. 2a die ebenfalls rechteckförmigen und zwischen den Receiverelektroden der dargestellten Sorte 6p angeordneten Receiverelektroden der wechselseitigen Sorte ausgelassen. Für eine sinusförmige Charakteristik der Koppelsignale weisen die Receiverelektroden 6p die dargestellte Rechtecksform und die Emitterelektroden 5a bzw. 5i die dargestellte Sinusform auf, wobei Receiverelektroden 6p und Emitterelektroden 5a bzw. 5i zumindest annähernd gleiche Breite als Ausdehnung in z-Richtung aufweisen. Somit erfolgen bei einer Relativbewegung in zirkularer Richtung z von Rotor zu Stator, und damit der ersten zu den zweiten Koppelelektroden bzw. 5a bzw. 5i und 6p, Übergänge von Zuständen einer vollständigen Überlagerung von Emitterelektroden mit Receiverelektroden einer Polung (Relativlagen A, A' und A") zu Zuständen, in dem keine Überlagerung vorhanden ist (Relativlagen B und B'). Dadurch ergibt sich der dargestellte sinusförmige Verlauf des Koppelsignals 7 einer Phase eines Sensorrings mit Maxima der Signalamplitude für vollständige Überlagerung in den Relativlagen A, A' und A" und Minima für überlagerungslose Relativlagen B und B'. Die zwischen den ersten und zweiten Koppelelektroden übertragenen Koppelsignale enthalten eine Information über den Winkel als Relativlage von erster zu zweiter Scheibe. Durch Signalauswerten der zwischen den ersten und zweiten Koppelelektroden übertragenen Koppelsignale eines einzelnen Sensorrings ist dabei ein Winkel inkrementell bestimmbar. Anders formuliert ist ein zu bestimmender Winkel nur innerhalb der Periodenlänge D, welche der doppelten Elektrodenbreite entspricht und in Fig. 2a dargestellt ist als Abstand zweier Minima, eindeutig bestimmbar.

Die Amplituden der einzelnen Koppelsignale werden optional bei deren Auswertung berücksichtigt, wodurch vorteilhaft Abweichungen von einer idealen Elektrodengeometrie wie Abweichungen von Ideallagen der zweiten Koppelelektroden 6p (bzw. 6n) und/oder ersten Koppelelektroden 5a bzw. 5i auf dem Rotor bzw. Stator und/oder Abweichungen von idealen Elektrodenformen, z.B. Abweichungen von der idealen Rechteck- bzw. Sinusform, kompensierbar sind.

Fig. 2b zeigt eine theoretische relative Anordnung von zwei Receiverelektroden 6p und 6n als zweite Koppelelektroden beider Sorten zu vier Emitterelektroden 5R-5U als erste Koppelelektroden. Die Emitterelektroden 5R-5U werden mit zeitlich sich ändernden Signalen, z.B. in Form von Wechselspannungssignalen gleicher Amplitude und Frequenz, angesteuert und weisen vier verschiedener Koppelsignalphasen R, S, T, und U auf. Mittels kapazitiver Kopplung werden die Koppelsignale von den Receiverelektroden 6p und 6n empfangen und über die Kontakte 51 mit unterschiedlicher Polung mittelbar oder unmittelbar einer Auswerteeinheit zur differentiellen Auswertung zugeführt.

Die Breite B1 der Receiverelektroden 6p und 6n ist wie bereits erwähnt gleich der Breite B2 der Emitterelektroden 5R-5U an deren breitester Stelle. Um Randeffekte zu berücksichtigen, kann es alternativ vorteilhaft sein, die Breite B2 der Emitterelektroden 5R-5U etwas kleiner zu halten als die Breite B1 der Receiverelektroden 6p, 6n. Zur Kompensation von Exzentrizitäten des Stators und/oder Rotors weisen die Receiverelektroden 6p und 6n vorteilhaft wie dargestellt eine radiale Erstreckung L2, also Länge entlang der Längsachse, auf, welche grösser ist als die radialen Erstreckung L1 der Emitterelektroden 5R-5U des gleichen Sensorrings. Durch die radiale Ausrichtung der Emitterelektroden 5R-5U und Receiverelektroden 6p und 6n und deren unterschiedliche Länge L1 bzw. L2 ist auch bei einer durch ein exzentrisches Verhalten bedingten Abweichung von einer Ideallage des Stators zum Rotor in allen Drehstellungen von Stator zur Rotor eine von dieser Abweichung zumindest weitgehend unbeeinflusste kapazitive Kopplung sichergestellt.

Die dargestellte Anordnung eines Paars von benachbarten Receiverelektroden 6p, 6n unterschiedlicher Sorte bzw. von vier benachbarten Emitterelektroden 5R-5U aller vier verwendeten Koppelsignalphasen definieren ein sogenanntes Alpha-Intervall α. Die Breite des Alpha-Intervalls α ist definiert durch die zirkulare Breite der Emitterelektroden. Ein von der Anzahl der Koppelsignalphasen abhängiges Alpha-Intervall α der (nur theoretisch möglichen) Anordnung nach Fig. 2b stellt somit jeweils die kleinste in sich abgeschlossene kapazitive Signalkoppeleinheit des ersten bzw. zweiten Sensorrings dar.

Die vier Emitterelektroden 5R,5S,5T und 5U sind dabei jeweils um ein Viertel der Breite des alpha-Intervalls zueinander verschoben. Daher sind die von Ihnen erzeugten sinusförmigen Koppelsignale mit den Receiverelektroden einer Sorte geometrisch um 90° phasenversetzt zueinander.

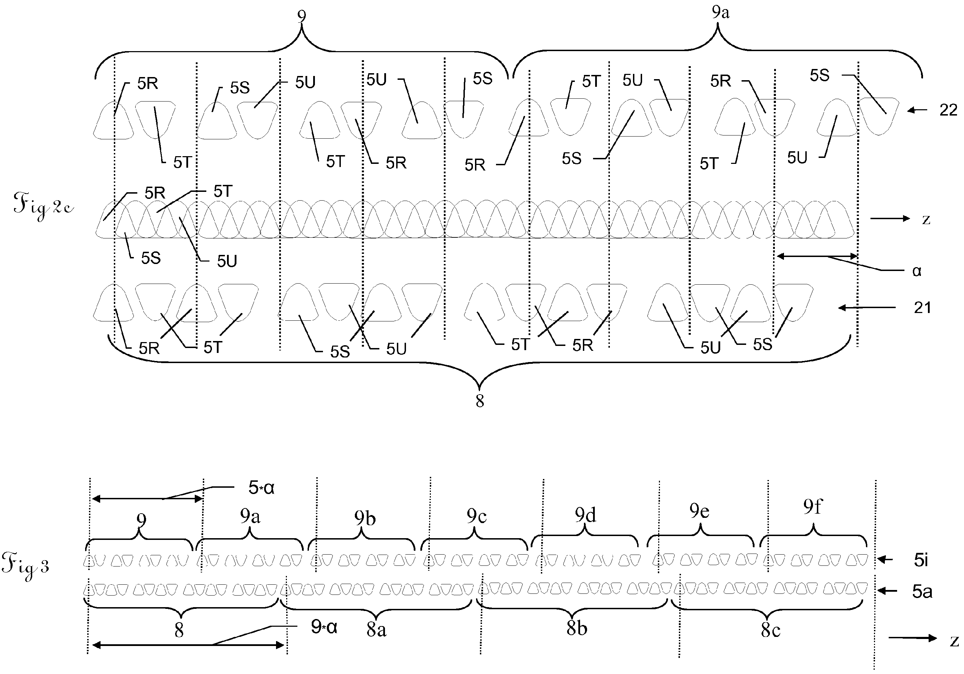

Da eine solche Anordnung mit überlappenden Elektroden in der Praxis natürlich nicht möglich ist, werden wie in der folgenden Fig. 2c dargestellt, Emitterelektroden selektiv mittels einer Phasenpermutation ausgelassen.

Fig. 2c zeigt in der Mitte die in der Praxis unmögliche Anordnung von sich überlagernden ersten Koppelelektroden als Emitterelektroden 5R-5U aus Fig. 2b mit der einfachen Abfolge von Phasen RSTU in zirkularer Richtung z fortgesetzt, wobei sich die Anordnung aus Fig. 2b neunmal wiederholt, also neun Alpha-Intervalle α dargestellt sind. Die gestrichelten vertikalen Linien zeigen jeweils Emitterelektroden gleicher Phase 5R als Beginn eines jeweils neuen Alpha-Intervalls α an. Mittels des im Folgenden beschriebenen Prinzips der Phasenpermutation werden von diesen sechsunddreissig Emitterelektroden nun gezielt Emitterelektroden weggelassen.

Ein Beispiel für eine erste Phasenpermutation 21 ist in Fig. 2c unten dargestellt. In der Zeichnung links beginnend werden von den ersten acht Emitterelektroden die Emitterelektroden 5R und 5T mit den Phasen R und T beibehalten, die Emitterelektroden mit den Phasen S und U weggelassen. Von den folgenden acht Emitterelektroden werden die Emitterelektroden 5S und 5U beibehalten, diejenigen mit den Phasen R und T ausgelassen. Von den folgenden 20 Emitterelektroden werden dann je 2 Elektroden 5R, 5S, 5T und 5U beibehalten und je 3 Elektroden 5R, 5S, 5T und 5U ausgelassen, wie in Figur 2c unten dargestellt. Die übrig gebliebenen sechzehn Emitterelektroden bilden ein erstes Permutationsintervall 8, kurz P-Intervall genannt, mit der Phasenabfolge R-T-R-T-S-U-S-U-T-R-T-R-U-S-U-S. Nach Ende eines ersten P-Intervalls 8 wird diese Phasen- bzw. Emitterelektrodenabfolge wiederholt, so dass der gesamte Sensorring abgedeckt ist. Von diesen sechzehn Emitterelektroden entsprechen somit je vier Emitterelektroden jeder der vier Phasen, womit über das gesamte erste P-Intervall 8 und damit den gesamten Sensorring eine Gleichverteilung der vier Phasen gegeben ist. Die Länge des ersten P-Intervalls 8 entspricht der Länge der Anordnung aus der sich neunmal wiederholenden einfachen Anordnung in der Mitte der Fig. 2b, entspricht also neun Alpha-Intervallen α. Die erste Anzahl P1 der Alpha-Intervalle α, welche dem ersten P-Intervall 8 entsprechen, beträgt also P1=9. Mit anderen Worten stellt ein erstes P-Intervall 8 eine Kombination aus neun Alpha-Intervallen α dar.

In Fig. 2c oben ist eine zweite Phasenpermutation 22 dargestellt. Es ergibt sich ein zweites P-Intervall 9 mit der Phasenabfolge R-T-S-U-T-R-U-S. Die zweite Anzahl P2 der Alpha-Intervalle α, welche dem zweiten P-Intervall 9 entsprechen, beträgt somit P2=5. Nach Ende eines zweiten P-Intervalls 9 wird diese Phasen- bzw. Emitterelektrodenabfolge über den gesamten Sensorring jeweils wiederholt, wie in Fig. 2c oben mit dem nächstes zweiten P-Intervall 9a angedeutet.

Aufgrund der unterschiedlichen ersten und zweiten Phasenpermutation 21 und 22 als unterschiedliche Kombinationen von Alpha-Intervallen α weist das erste P-Intervalls 8 mehr Alpha-Intervallen α auf als das zweite P-Intervalls 9, ist die zirkulare Ausdehnung eines zweiten P-Intervalls 9 kürzer als diejenige eines ersten P-Intervalls 8 und die Anordnung der Emitterelektroden nicht deckungsgleich. So befinden sich beim ersten P-Intervall 8 teilweise Emitterelektroden an Stellen, an denen beim zweiten P-Intervall 9 Stellen ohne Emitterelektroden sind und umgekehrt. Somit sind der erste und zweite Sensorring aufgrund der unterschiedlichen ersten und zweiten Phasenpermutation zueinander unterschiedlich und mittels der Ausgestaltung der ersten und zweiten Phasenpermutation aufeinander abstimmbar.

Um einen elektrisch ausreichend isolierenden Abstand zwischen den übrig gebliebenen Emitterelektroden zu erhalten bei dennoch kompakter Anordnung der Emitterelektroden, weisen jeweils direkt benachbarte Emitterelektroden vorteilhaft sowohl beim ersten als auch beim zweiten P-Intervall 8 bzw. 9 eine gegensinnige radiale Ausrichtung auf, d.h. die jeweils übernächsten Emitterelektroden sind wie in Fig. 2c dargestellt um 180° im Vergleich zu den jeweils nächsten Emitterelektroden gedreht. Emitterelektroden der einen Ausrichtung sind dabei optional leicht anders geformt als die Emitterelektroden der gegensinnigen Ausrichtung, um durch die kreisförmige Anordnung bedingte Unterschiede wie unterschiedliche Lage der einzelnen Emitterelektroden auszugleichen, wodurch störende Einflüsse durch Abweichungen von der Ideallage des Stators und/oder Rotors ausgeglichen werden, die bei identischer Form aller Emitterelektroden gegebenenfalls auftreten würden.

Das Ansteuern von Emitterelektroden einer Phase eines oder beider Sensorringe, z.B. aller Emitterelektroden 5R, erfolgt optional mittels eines Zeitmultiplexverfahren zeitlich versetzt zum Ansteuern der Emitterelektroden der anderen Phasen, also z.B. der Emitterelektroden 5T-5U, wodurch gegenseitige Störungen der Koppelsignale vermieden werden.

Fig. 3 zeigt als Ausschnitt aus dem Stator einen vollständigen Satz aus Emitterelektroden 5a des ersten Sensorrings und einen vollständigen Satz aus zweiten Emitterelektroden 5b des zweiten Sensorrings, welche jeweils in zirkularer Richtung z die statorseitigen ersten Koppelelektroden des ersten bzw. des zweiten Sensorrings bilden. Der Satz aus einer Vielzahl von Emitterelektroden 5a des ersten Sensorrings weist eine Anzahl M1 aus gleichen ersten P-Intervallen 8 nach Fig. 2c auf. Im Beispiel beträgt die Anzahl M1 vier erste P-Intervalle 8-8c. Der Satz aus einer Vielzahl von Emitterelektroden 5b des zweiten Sensorrings weist eine Anzahl M2 aus gleichen zweiten P-Intervallen 8 nach Fig. 2c auf, im Beispiel sind dies sieben zweite P-Intervalle 9-9f. Die Anzahl M1 bzw. M2 der P-Intervalle 8 bzw. 9 pro Sensorring ist dabei neben der gewählten Phasenpermutation und damit Abfolge der Emitterelektroden unterschiedlicher Phase natürlich auch abhängig vom (mittleren) Radius des jeweiligen Sensorrings und der (mittleren) Grösse bzw. zirkularen Ausdehnung der Emitterelektroden.

Da die ersten P-Intervalle 8-8c zueinander gleich sind, ist allein anhand des ersten Sensorrings ein Winkel nur mehrdeutig bestimmbar. Dies gilt äquivalent für den zweiten Sensorring. Um mit dem Winkelencoder Winkel eindeutig zu bestimmen, unterscheiden sich die Anordnung der Koppelelektroden des ersten Sensorrings definiert von derjenigen des zweiten Sensorrings, so dass anhand der Koppelsignale beider Sensorringe die Mehrdeutigkeit aufgelöst wird. Im Beispiel ist die erste Gesamtzahl N1 der Alpha-Intervalle α des ersten Sensorrings teilerfremd zur zweiten Gesamtzahl N2 der Alpha-Intervalle α des zweiten Sensorrings. Mit anderen Worten ist im vorliegenden Beispiel das mathematischen Produkt M1*P1 aus der Anzahl M1 (im Beispiel vier) der ersten P-Intervalle 8 und der ersten Anzahl P1 der Alpha-Intervalle α (im Beispiel neun) eines ersten P-Intervalls 8 teilerfremd zum Produkt M2*P2 aus der Anzahl M2 (im Beispiel sieben) der zweiten P-Intervalle 9 und der zweiten Anzahl P2 der Alpha-Intervalle α (im Beispiel fünf) eines zweiten P-Intervalls 9: *N*1=*M*1·*P*1=4-9=36⊥*N*2=*M*2·*P*2=7·5=35. Die erste und zweite Phasenpermutation sind also derart aufeinander abgestimmt gewählt, dass anhand beider so aufeinander angepasster Sensorringe mit dem erfindungsgemässen Winkelencoder Winkel absolut bestimmbar sind.

Als Option werden mittels eines Zeitmultiplexverfahrens die Emitterelektroden 5a des erste Sensorrings zeitlich versetzt zu den Emitterelektroden 5i des zweiten Sensorrings mit zeitlich sich ändernden Signalen angesteuert, wodurch gegenseitige Störungen auch dann vermeidbar sind, wenn die ersten und zweiten Emitterelektroden 5a bzw. 5i (bzw. die jeweils zugehörigen Receiverelektroden) auf dem Stator (bzw. Rotor) unabgeschirmt nahe beieinander angeordnet sind. Der radiale Abstand des ersten, äusseren Sensorrings zum zweiten, inneren kann somit gering gehalten werden, was hinsichtlich eines kompakten Winkelencoders von Vorteil ist.

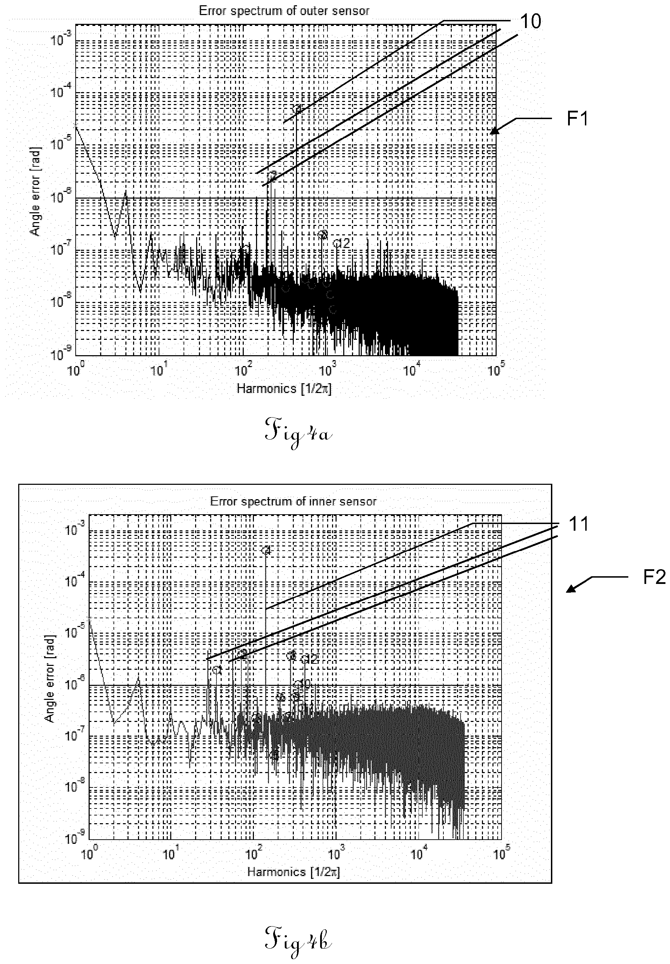

Die Abfolge der Emitterelektroden 5a des äusseren Sensorrings und der Emitterelektroden 5i des inneren Sensorrings sind optional derart aufeinander abgestimmt gewählt, dass sich Schwachstellen in den Fehlerspektren des ersten und des zweiten Sensorrings zumindest in Abschnitten der Fehlerspektren gegenseitig kompensieren, wie nachfolgend anhand den Fig. 4a-c beschrieben wird. Im Beispiel erfolgt dies durch Abstimmung der ersten Phasenpermutation auf die zweite Phasenpermutation und damit der Anordnungen der Emitterelektroden 5a bzw. 5i und der Anzahl M1 der ersten P-Intervalle 8 und die Anzahl M2 der zweiten P-Intervalle 9.

Die Fig. 4a und 4b zeigen zwei rein beispielhafte Fehlerspektren. Fig. 4a zeigt das Fehlerspektrum F1 des äusseren Sensorrings mit ersten und zweiten Koppelelektroden, deren Phasenabfolge durch eine erste Phasenpermutation wie z.B. nach Fig. 2c definiert ist. Fig. 4b zeigt das Fehlerspektrum F2 des inneren Sensorrings mit ersten und zweiten Koppelelektroden, deren Phasenabfolge durch eine zweite Phasenpermutation wie z.B. nach den Fig. 2c bzw. Fig. 3 definiert ist. Auf der Rechtsachse ist jeweils die Frequenz als die Zahl der Harmonischen dargestellt, auf der Hochachse der Winkelfehler der jeweiligen Harmonischen.

Das Fehlerspektrum F1 (Fig. 4a) des ersten Sensorrings zeigt Schwachstellen 10 z.B. im Abschnitt zwischen der 100. und der 500. Harmonischen, deren Amplituden bzw. Winkelfehler stark ausgebildet sind. Die Amplituden dieser Harmonischen sind im Fehlerspektrum F2 des zweiten Sensorrings (Fig. 4b) nur gering ausgebildet, wodurch diese Fehleranteile des ersten Sensors durch den zweiten Sensor ausgleichbar sind. Umgekehrt zeigt das Fehlerspektrum F2 Schwachstellen 11 z.B. im Abschnitt zwischen der 11. Harmonischen und der 200. Harmonischen. Die Amplituden dieser Harmonischen sind im Fehlerspektrum F1 des ersten Sensorrings klein, wodurch diese Fehleranteile des zweiten Sensors durch den ersten Sensor ausgleichbar sind. Zur Kompensation der Hauptlinien der Fehlerspektren sind die erste Alpha-Intervall-Gesamtzahl N1 des ersten Sensorrings und alle ihre Vielfachen ungleich der zweiten Alpha-Intervall-Gesamtzahl N2 des zweiten Sensorrings und aller ihrer Vielfachen. Vorteilhaft kompensieren sich auch Nebenlinien der Fehlerspektren gegenseitig. Besonders vorteilhaft sind die Abfolgen der ersten Koppelelektroden bzw. die Phasenpermutationen des ersten und zweiten Sensorrings derart optimiert aufeinander abgestimmt, dass die beiden Fehlerspektren F1 und F2 orthogonal zueinander sind bzw. sich nicht gegenseitig überlappen.

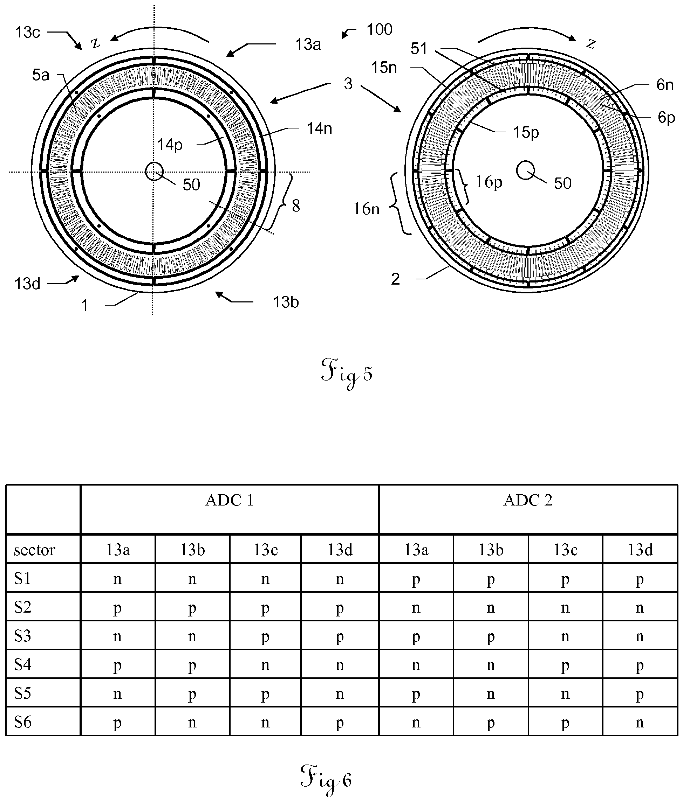

Fig. 5 zeigt einen Winkelencoder 100 mit Stator 1 und Rotor 2, wobei der Übersichtlichkeit wegen nur der erste Sensorring 3 der zwei oder mehr Sensorringe eingezeichnet ist. Beim ersten Sensorring 3 der dargestellten Ausführungsform werden die Koppelsignale gleicher Polung eines Sektors sektorweise zusammengeführt. Hierzu weist der Rotor 2 Überführungselektroden 15n auf, welche mit Überführungselektroden 6n der einen Sorte (siehe Fig. 1) über Kontakte 51 elektrisch leitend verbunden sind, und Überführungselektroden 15p, welche mit Receiverelektroden 6p der wechselseitigen Sorte elektrisch leitend verbunden sind. Die Überführungselektroden 15n bilden einen äusseren Ring um die Receiverelektroden 6p und 6n, die wechselseitigen Überführungselektroden 15p einen inneren Ring. Der Stator 2 weist entsprechend pro Sorte einen Ring von Überführungselektroden 14n auf, einmal aussen um die Emitterelektroden 5a und einmal innen um die Emitterelektroden 5a, welche jeweils mit der Überführungselektroden 15n bzw. 15p des Rotors 2 kapazitiv koppeln. Die Überführungselektroden 14p und 14n sind von den Emitterelektroden 5a elektrisch isoliert. Von den Überführungselektroden 14p bzw. 14n werden die Koppelsignale je einem Signalwandler zur differentiellen Signalauswertung zugeführt. Unabhängig von einer sektorweisen Zusammenführung bietet eine Koppelsignalüberführung per Überführungselektroden, im Gegensatz zu einer direkten Verbindung des Rotors 2 zu einer Auswerteeinheit, den Vorteil, dass der Rotor 2 dadurch als passive zweite Scheibe ausgeführt ist, was den Herstellungsprozess des Rotors 2 vereinfacht.

Zur Robustheit gegenüber Exzentrizitäten des Stators 1 und/oder des Rotors 2 ist vorteilhaft die radiale Ausdehnung der statorseitigen Überführungselektroden 14p und 14n wie dargestellt grösser als die radiale Ausdehnung der rotorseitigen Überführungselektroden 15p und 15n. Als weitere Option weisen die Überführungselektroden 14p und 14n des Stators 1 und/oder die Überführungselektroden 15p und 15n des Rotors zueinander gleiche Flächen auf, wozu die radiale Ausdehnung der weiter aussen gelegenen Überführungselektroden 14n bzw. 15n geringer ist als diejenige der weiter innen gelegenen Überführungselektroden 14p bzw. 14n. Weist der Stator 1 bzw. der Rotor 2 pro Sorte jeweils nur eine kreisförmige Überführungselektroden 14p, 14n, 16p bzw. 16n auf, dann weist diese eine elektrisch isolierende Unterbrechung zum Unterbinden von elektrischen Ringströmen auf.

Bevorzugt ist jedoch wie dargestellt der Stator 1 bezüglich der Überführungselektroden 14p bzw. 14n in mindestens drei Sektoren aufgeteilt. Im Beispiel handelt es sich um vier gleichmässig verteilte bzw. gleichgrosse Sektoren 13a-13d. Jeder Sektor 13a-13d weist pro Sorte eine Überführungselektroden 14p bzw. 14n auf, wobei die Überführungselektroden 14p bzw. 14n der einzelnen Sektoren elektrisch voneinander isoliert sind. Durch die derart ausgebildeten Überführungselektroden 14n und 14p werden sowohl diejenigen Koppelsignale sektorweise zusammengeführt, welche von der einen Sorte Receiverelektroden stammen, als auch diejenigen, die von der wechselseitigen Sorte Receiverelektroden stammen. Mit anderen Worten werden alle Koppelsignale, die mittels kapazitiver Kopplung vom Rotor 2 auf den Stator 1 innerhalb des jeweiligen Sektors 13a-13d übertragen werden, getrennt nach Sorte durch die den jeweiligen Sektor 13a-13d umfassende Überführungselektrode 14p oder 14n vereint. Das Auslesen eines jeden Sektors 13a-13d erfolgt dabei optional für jeden Sektor 13a-13d separat, indem der Winkelencoder pro Sektor ein separater Signalwandler aufweist oder die zusammengeführten Koppelsignale verschiedener Sektoren zeitlich versetzt an einen gemeinsamen Signalwandler geführt werden, wozu ein Zeitmultiplexverfahren eingesetzt wird.

Optional beträgt die Anzahl der Receiverelektroden pro Polung 6n bzw. 6p ein mathematisches Vielfaches der Anzahl der Sektoren 13a-13d, im Beispiel also ein Vielfaches von vier. Als weitere Option weist der Rotor 2 wie in Fig. 5 dargestellt pro Polung mehrere Überführungselektroden 16n bzw. 16p auf, welche jeweils mit einer Sequenz 16n bzw. 16p von Receiverelektroden 6a elektrisch verbunden sind. Die zirkulare Ausdehnung einer solchen Sequenz 16n bzw. 16p entspricht dabei vorzugsweise der zirkularen Ausdehnung eines P-Intervalls 8 auf dem Stator 1. Im Beispiel weist der Stator 1 zwölf P-Intervalle auf, weshalb der Rotor 2 pro Polung 12 Sequenzen 16n bzw. 16p von Receiverelektroden 6a und entsprechend 12 Überführungselektroden pro Sorte 15n bzw. 15p aufweist. Durch eine derartige Verbindung von Sequenzen 16p bzw. 16n, deren Winkelbereich demjenigen eines P-Intervalls 8 entsprechen, wird erreicht, dass die Sinusform der Koppelsignale auch bei der sektorweisen Zusammenführung von Koppelsignalen ohne zusätzliche Massnahmen erhalten bleibt. Alternativ weist der Rotor 2 pro Receiverelektrode 6a und Sorte je eine Überführungselektrode 15n bzw. 15p auf.

Durch eine sektorweise Zusammenführung von Koppelsignalen, welche in der vorliegenden Ausführungsform mittels der sektorweise aufgeteilten Überführungselektroden 14p und 14n erfolgt, ist es ermöglicht, diese sektorweise zusammengeführten Koppelsignale vergleichend auszuwerten, beispielsweise durch Addieren mit gegensinnigen Vorzeichen. Durch eine solche vergleichende Auswertung werden Informationen über eine Abweichung der Anordnung der ersten und/oder zweiten Scheibe von einer Ideallage relativ zur Messachse ermittelt. Mittels einer solchen Information werden, vor allem niederfrequente, Fehler bzw. Anteile des Fehlerspektrums kompensiert, welche durch Abweichungen der Anordnung des Stators 1 und/oder Rotors 2 von einer Ideallage relativ zur Messachse 50 bedingt sind, wie z.B. Exzentrizität oder Verkippung. Zusätzlich oder alternativ werden mittels der Informationen über eine Abweichung der Anordnung der ersten und/oder zweiten Scheibe von einer Ideallage relativ zur Messachse diese Abweichung in Form eines abgeleiteten Messwerts selbst bestimmt.

Zur weitergehenden Fehlerkompensation, besonders von niederfrequenten Fehleranteilen, weist in Ausführungsformen zur hochpräzisen Winkelbestimmung nicht nur ein Sensorring, sondern jeder Sensorring bezüglich der Koppelsignale Sektoren zur sektorweisen Zusammenführung und vergleichenden Auswertung der Koppelsignale gleicher Polung des jeweiligen Sensorrings auf. In einigen Ausführungsformen sind die Sektoren des ersten Sensorrings abgestimmt unterschiedlich zum zweiten Sensorring. Beispielsweise unterscheidet sich die Anzahl der Sektoren des ersten Sensorrings von der Anzahl der Sektoren des zweiten Sensorrings. Alternativ oder zusätzlich sind die Sektoren des ersten Sensorrings versetzt zu denen des zweiten Sensorrings angeordnet. Beispielsweise weisen sowohl der erste Sensorring wie auch der zweite Sensorring je vier 90° grosse Sektoren auf, diese sind jedoch um 45° zueinander verschoben.

Speziell bei Ausführungsformen, bei denen die Sektoren zur sektorweisen Zusammenführung der Koppelsignale bei beiden Sensorringen gleich sind (gleich gross und gleich angeordnet), werden hinsichtlich einer weiter verbesserten Überwachung bzw. Kompensation von Abweichungen von einer Ideallage relativ zur Messachse von Stator und/oder Rotor die Koppelsignale der einzelnen Sektoren 13a-13d an einen ersten Signalwandler und einen zweiten Signalwandler angelegt. Dabei können jeweils alle Sektoren 13a-13d des gleichen Sensorrings an den gleichen Signalwandler angelegt werden oder Koppelsignale des gleichen Sensorrings werden teils an den ersten Signalwandler, teils an den zweiten Signalwandler angelegt. Dabei sind diese Belegungszustände fix oder alternativ mittels Schalter auch nach der Montage veränderbar.

Die Tabelle nach Fig. 6 zeigt sechs Belegungszustände S1-S6 für einen Winkelencoder nach Fig. 5 mit je vier gleichen Sektoren 13a-13d und zwei Analog-Digital-Konvertern ADC1 und ADC2 und Im ersten Belegungszustand S1 werden alle Koppelsignale der ersten Sorte (Symbol n) an den ersten ADC1 geführt und demgemäss alle Koppelsignale der zweiten, wechselseitigen Sorte (Symbol p) an den zweiten ADC2. Der zweite Belegungszustand S2 ist zum ersten invers: alle Koppelsignale der zweiten Sorte p werden an den ersten ADC1 geführt und demgemäss alle Koppelsignale des ersten Sorte p an den zweiten ADC2. Im dritten Belegungszustand S3 werden an den ersten ADC1 die Koppelsignale der Sektoren 13a und 13b des ersten Sorte n und die Koppelsignale der Sektoren 13c und 13d der zweiten Sorte p geführt und entsprechend an den zweiten ADC1 die Koppelsignale der Sektoren 13a und 13b der zweiten Sorte p und die Koppelsignale der Sektoren 13c und 13d der ersten Sorte n. Im fünften Belegungszustand S5 werden an den ersten ADC1 die Koppelsignale der ersten Sorte n der Sektoren 13a und 13d geführt, die Koppelsignale der zweiten Sorte p der Sektoren 13b und 13c. Die Belegungszustände S4 und S6 sind invers zu den Zuständen S3 bzw. S5.

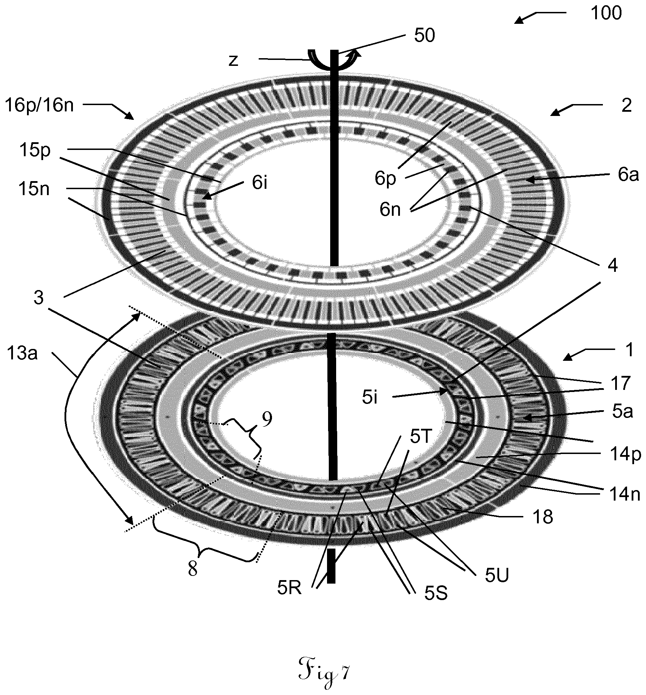

Fig. 7 zeigt perspektivisch ein weiteres Beispiel für einen erfindungsgemässen Winkelencoder 100 mit Stator 1 und Rotor 2, wobei der Abstand von Stator 1 zu Rotor 2 zur besseren Übersicht übertrieben gross gezeichnet ist. Der Winkelencoder 100 weist einen ersten Sensorring 3 und einen zweiten Sensorring 4 auf, jeweils mit einer Vielzahl von Emitterelektroden 5a bzw. 5i und einer Vielzahl von Receiverelektroden 6a bzw. 6i, wobei sich bei beiden Sensorringen 3 und 4 jeweils Receiverelektroden wechselseitiger Sorte 6n bzw. 6p abwechseln. Die Emitterelektroden 5a und 5i als erste Koppelelektroden weisen jeweils vier unterschiedliche Phasen 5R-5U auf. Die phasenbezogene Abfolge der Emitterelektroden 5a des ersten, äusseren Sensorrings 3 ist durch eine erste Phasenpermutation nach Fig. 2c definiert, so dass eine Reihe von sechzehn ersten Emitterelektroden 5a jeweils ein erstes P-Intervall 8 bilden, wobei der erste Sensorring 3 eine Anzahl M1 von zwölf ersten P-Intervallen 8 und eine erste Alpha-Intervall-Gesamtzahl N1 aufweist. Die phasenbezogene Abfolge der Emitterelektroden 5i des zweiten, inneren Sensorrings 4 ist durch eine zweite Phasenpermutation nach Fig. 2c definiert, so dass eine Reihe von acht zweiten Emitterelektroden 5i jeweils ein zweites P-Intervall 9 bilden, wobei der zweite Sensorring 4 eine Anzahl M2 von sieben zweiten P-Intervallen 9 und eine zweite Alpha-Intervall-Gesamtzahl N2 aufweist. Die erste Alpha-Intervall-Gesamtzahl N1 ist teilerfremd zur zweiten Alpha-Intervall-Gesamtzahl N2. Die erste und zweite Phasenpermutation bzw. das erste und zweite P-Intervall 8 bzw. 9 und deren jeweilige Anzahl auf dem Stator 1 sind zudem derart aufeinander abgestimmt gewählt, dass die Fehlerspektren des ersten Sensorrings 3 und des zweiten Sensorrings 4 orthogonal zueinander sind.

Zur Überführung der Koppelsignale vom Rotor 2 auf den Stator 1 weist jeder Sensorring 3 bzw. 4 statorseitig und rotorseitig Überführungselektroden 14p bzw. 15p der einen Sorte und Überführungselektroden 14n bzw. 15n der wechselseitigen Sorte auf. Statorseitig weist der erste Sensorring 3 vier gleich grosse Überführungselektroden 14p bzw. 14n auf, welche je Sektor einen Bereich von 90° abdecken, um die Koppelsignale des ersten Sensorrings 3 sektorweise in vier Sektoren (ein Sektor 13a ist zeichnerisch angedeutet) zusammenzuführen. Die sektorweise zusammengeführten Koppelsignale des ersten Sensorrings 3 werden vergleichend ausgewertet, wodurch sich vor allem niederfrequente Anteile des Fehlerspektrums des ersten Sensorrings 3 und damit des Winkelencoders 100 insgesamt kompensieren lassen.

Zur Verminderung oder Vermeidung von Störungen der Wechselspannungssignale und Beeinträchtigungen der Sinusform der Koppelsignale sind die ersten Koppelelektroden 5a und 5i jeweils von einem elektrisch abschirmenden Schutzelektrodenring 17 vollständig umgeben. Die radiale Ausdehnung des jeweiligen Schutzelektrodenrings und die radiale Erstreckung der ersten Koppelelektroden 5a bzw. 5i und der zweiten Koppelelektroden 6a bzw. 6i sind optional derart aufeinander abgestimmt, dass die. zweiten Koppelelektroden 6a bzw. 6i soviel länger als die ersten Koppelelektroden 5a bzw. 5i sind, dass sie den Bereich des Schutzelektrodenrings 17 mit abdecken. Mit anderen Worten ist die radiale Erstreckung der zweiten Koppelelektroden 6a bzw. 6i so gross wie die radiale Ausdehnung der ersten Koppelelektroden 5a bzw. 5i und des Schutzelektrodenrings 17 zusammen.

Um den Abstand zwischen direkt benachbarten ersten Koppelelektroden 5a bzw. 5i möglichst gering zu halten und gleichzeitig die Sinusform der ersten Kopppelelektroden 5a bzw. 5i und damit die Sinuscharakteristik der Koppelsignale beizubehalten, ist die Form der ersten Koppelelektroden 5a bzw. 5i wie im Beispiel nach Fig. 7 derart gewählt, dass die sich gegenüberstehenden Seiten direkt benachbarter erster Koppelelektroden 5a bzw. 5i eine etwa gerade Linie 18 bilden. Dies ist bei den Emitterelektroden 5a des ersten Sensorrings aufgrund deren relativ grossen radialen Ausdehnung besonders ausgeprägt. Durch eine derartige Formgebung wird ein kompakter Aufbau des Winkelencoders 100 bzw. eine möglichst hohe Emitterelektrodendichte erreicht.

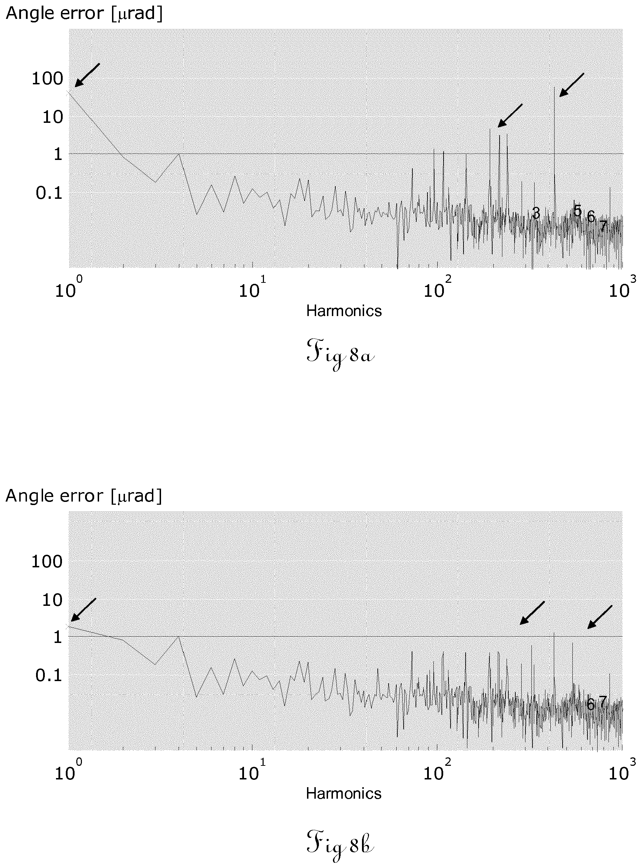

Die Fig. 8a und 8b zeigen beispielhaft Gesamtfehlerspektren des Winkelencoders nach Fig. 7. Das Fehlerspektrum nach Fig. 8a zeigt die Fehleranteile der einzelnen Harmonischen vor Durchführung einer Selbstkompensation bzw. Selbstkalibrierung. Grosse Winkelfehler bzw. hohe Amplituden sind z.B. im niederfrequenten Abschnitt, vor allem bei der ersten Harmonischen, und im hochfrequenten Abschnitt zu erkennen, in Fig. 8a markiert durch kleine Pfeile.

Fig. 8b zeigt das Fehlerspektrum nach einer Selbstkompensation. Aufgrund der gegenseitigen Abstimmung des ersten und zweiten Sensorrings, beispielsweise aufgrund der abgestimmten Wahl der ersten und zweiten Phasenpermutation, und der sektorweisen Zusammenführung von Koppelsignalen des ersten Sensorrings und deren vergleichender Auswertung ist eine deutliche Reduktion von Winkelfehlern erreicht worden (erkenntlich u.a. an den durch die kleinen Pfeile markierten Stellen). Schwachstellen, welche z.B. bedingt sind durch Deformationen des Stators und/oder Rotors wie Unebenheiten der Scheibenfläche, Übersprechen von Wechselspannungs- und/oder Koppelsignalen, Abweichungen von einem idealen Wechselspannungssignal und dergleichen, des ersten Sensorrings werden durch die korrespondierenden Anteile des zweiten Sensorrings kompensiert und umgekehrt und globale Fehlerquellen wie Exzentrizitäten der Scheiben oder deren Taumeln werden aufgrund der Aufteilung in Sektoren von wenigstens einem Sensorring hinsichtlich der Koppelsignale kompensiert. Durch die vorliegende Erfindung wird also ein Winkelencoder bereitgestellt, welcher eine im Vergleich zu kapazitiven absoluten Winkelencodern nach dem Stand der Technik verbesserte Selbstkompensation von Fehlern bietet und damit im Vergleich zu kapazitiven absoluten Winkelencodern nach den Stand der Technik ein sehr viel präziseres Bestimmen von Winkeln ermöglicht.

Es versteht sich, dass die vorangehend gezeigten und erklärten Figuren nur mögliche Ausführungsbeispiele schematisch darstellen. Insbesondere wird darauf hingewiesen, dass die explizit dargestellten und erklärten Beispiele ausnahmslos sowohl separat voneinander als auch in jeglicher Kombination miteinander als kapazitive Winkelencoder einsetzbar sowie auch mit entsprechenden Vorrichtungen und Verfahren des Stands der Technik kombinierbar sind.

## Patentansprüche

1. Absoluter kapazitiver Winkelencoder (100) mit einem ersten Sensorring (3) und wenigstens einem zweiten Sensorring (4), mit jeweils
∘ auf einer ersten Scheibe (1), insbesondere einer Statorscheibe, kreisförmig angeordneten und radial ausgerichteten ersten Koppelelektroden (5a, 5i, 5R-5U), insbesondere Emitterelektroden, und
∘ auf einer zweiten Scheibe (2), insbesondere einer Rotorscheibe, kreisförmig angeordneten und radial ausgerichteten zweiten Koppelelektroden (6a, 6i, 6p, 6n), insbesondere Receiverelektroden,
wobei
• die zirkulare Breite der ersten und zweiten Koppelelektroden (5a, 5i, 5R-5U, 6a, 6i, 6p, 6n) eines jeweiligen Sensorrings (3, 4) aufeinander abgestimmt sind,
• die erste Scheibe (1) und die zweite Scheibe (2)
∘ auf einer Messachse (50) koaxial und beabstandet zueinander angeordnet sind und
∘ relativ zueinander um die Messachse (50) rotierbar sind, wobei
∘ der Abstand der ersten Scheibe (1) zur zweiten Scheibe (2) derart bemessen ist, dass durch kapazitive Kopplung zeitlich sich ändernde Koppelsignale (7) zwischen den ersten und zweiten Koppelelektroden (5a, 5i, 5R-5U, 6a, 6i, 6p, 6n) eines jeweiligen Sensorrings (3, 4) übertragbar sind, und
∘ durch Signalauswertung der zwischen den ersten und zweiten Koppelelektroden (5a, 5i, 5R-5U, 6a, 6i, 6p, 6n) übertragenen Koppelsignale (7) beider Sensorringe (3, 4) ein Winkel absolut bestimmbar ist,
• die ersten Koppelelektroden (5a, 5i, 5R-5U) wenigstens drei, insbesondere vier um jeweils 90°, zueinander versetzte Koppelsignalphasen (R, S, T, U) aufweisen, wobei
∘ anhand der Anzahl der Koppelsignalphasen (R, S, T, U) jeweils ein Alpha-Intervalle (α) definiert ist,
∘ durch die Alpha-Intervalle (α) eine Gliederung der ersten Koppelelektroden (5a, 5i, 5R-5U) vorgegeben ist und
∘ jeder Sensorring (3, 4) eine Alpha-Intervall-Gesamtzahl (N1, N2) als Anzahl aller Alpha-Intervalle (α) des jeweiligen Sensorrings (3, 4) aufweist,
• die zweiten Koppelelektroden (6a, 6i, 6p, 6n) für eine differentielle Signalauswertung in wenigstens zwei zueinander wechselseitige Sorten (n, p) aufgeteilt sind, wobei jeweils in zirkularer Richtung übernächste zweite Koppelelektroden (6a, 6i, 6p, 6n) jedes Sensorrings (3, 4) gleicher Sorte (n, p) sind, und
• bei wenigstens einem Sensorring (3, 4) die Koppelsignale (7) der zweiten Koppelelektroden (6a, 6i, 6p, 6n) einer Sorte eines Sektors (13a-13d) sektorweise zusammengeführt sind, wobei
∘ die Sektoren (13a-13d) sich, insbesondere gleichmässig, über den gesamten Sensorring (3, 4) verteilen und
∘ die Anzahl der Sektoren (13a-13d) wenigstens drei, insbesondere vier, beträgt,
so dass durch eine sektorbezogene vergleichende Auswertung von Koppelsignalen (7) unterschiedlicher Sektoren (13a-13d) Informationen über eine Abweichung der Anordnung der ersten und/oder zweiten Scheibe (1, 2) von einer Ideallage relativ zur Messachse (50) ermittelbar sind, insbesondere wobei die Anzahl der zweiten Koppelelektroden (6a, 6i, 6p, 6n) ein mathematisches Vielfaches der Anzahl der Sektoren (13a-13d) beträgt.

2. Winkelencoder (100) nach Anspruch 1,
**dadurch gekennzeichnet, dass**
mittels der Informationen über eine Abweichung der Anordnung der ersten und/oder zweiten Scheibe (1, 2) von einer Ideallage relativ zur Messachse (50)
• ,insbesondere niederfrequente, Fehler, welche durch Abweichung der Anordnung der ersten und/oder zweiten Scheibe (1, 2) von einer Ideallage relativ zur Messachse (50) bedingt sind, kompensierbar sind und/oder
• die Abweichung der Anordnung der ersten und/oder zweiten Scheibe (1, 2) von einer Ideallage relativ zur Messachse (50) bestimmbar ist.

3. Winkelencoder (100) nach Anspruch 1 oder 2,
**dadurch gekennzeichnet, dass**
sowohl beim ersten Sensorring (3) als auch beim zweiten Sensorring (4) jeweils die Koppelsignale (7) der zweiten Koppelelektroden (6a, 6i, 6p, 6n) gleicher Sorte (n, p) sektorweise zusammen geführt sind, insbesondere wobei
• sich die Anzahl der Sektoren (13a-13d) des ersten Sensorrings (3) von der Anzahl der Sektoren des zweiten Sensorrings (4) unterscheidet und/oder
• die Sektoren (13a-13d) des ersten Sensorrings (3), insbesondere bei je vier Sektoren (13a-13d) pro Sensorring (3, 4) um 45°, versetzt zu den Sektoren des zweiten Sensorrings (4) angeordnet sind,
und/oder
die Koppelsignale (7) sektorweise zusammengeführt sind indem die zweiten Koppelelektroden (6a, 6i, 6p, 6n) gleicher Sorte (n, p) eines jeweiligen Sektors (13a-13d) auf der zweiten Scheibe (2) elektrisch leitend verbunden sind.

4. Winkelencoder (100) nach einem der vorhergehenden Ansprüche,
**dadurch gekennzeichnet, dass**
die Abfolge der ersten Koppelelektroden (5a, 5R-5U) des ersten Sensorrings (3) und die Abfolge der ersten Koppelelektroden (5i, 5R-5U) des zweiten Sensorrings (4) derart aufeinander abgestimmt sind, dass sich Schwachstellen in den Fehlerspektren (F1, F2) der beiden Sensorringe (3, 4) zumindest abschnittsweise, insbesondere in höherfrequenten und/oder hochfrequenten Abschnitten der Fehlerspektren (F1, F2), gegenseitig kompensieren, insbesondere wobei
• zur Kompensation der Hauptlinien der Fehlerspektren (F1, F2) die erste Alpha-Intervall-Gesamtzahl N1 und alle ihre Vielfachen ungleich der zweiten Alpha-Intervall-Gesamtzahl N2 und aller ihrer Vielfachen sind, und/oder
• Nebenlinien der Fehlerspektren (F1, F2) sich ebenfalls gegenseitig kompensieren, insbesondere wobei die Fehlerspektren (F1, F2) der beiden Sensorringe (3, 4) orthogonal zueinander sind, und/oder
• die Signalauswertung dergestalt erfolgt, dass hochharmonische Fehleranteile kompensierbar sind.

5. Winkelencoder (100) nach einem der vorherigen Ansprüche,
**dadurch gekennzeichnet, dass**
die erste Scheibe (1) und die zweite Scheibe (2) für den ersten und/oder zweiten Sensorring (3, 4) Überführungselektroden (14n, 14p, 15n, 15p) zur Überführung der Koppelsignale (7) zwischen der ersten und der zweiten Scheibe (1, 2) aufweisen, wobei
• jede Scheibe (1, 2) pro Sensorring (3, 4) wenigstens eine Überführungselektrode (14n, 14p, 15n, 15p) pro Sorte (n, p) der zweiten Koppelelektroden (6a, 6i, 6p, 6n) aufweist
• jede Überführungselektrode (14n, 14p, 15n, 15p) der ersten oder zweiten Scheibe (1, 2) mit wenigstens einer ersten oder zweiten Koppelelektrode (5a, 5i, 5R-5U, 6a, 6i, 6p, 6n) elektrisch leitend verbunden ist, und
• Überführungselektroden (15n, 15p) der ersten Scheibe (1) mit Überführungselektroden (14n, 14p) der zweiten Scheibe (2) gleicher Sorte (n, p) und gleichen Sensorrings (3, 4) kapazitiv miteinander koppeln,
insbesondere wobei
• ringförmige Überführungselektroden (14n, 14p, 15n, 15p), die sich über einen Winkelbereich von 360° erstrecken, eine elektrisch isolierende Unterbrechung zur Vermeidung von elektrischen Ringströmen aufweisen und/oder
• zur Robustheit gegenüber Exzentrizitäten sich die radiale Ausdehnung miteinander koppelnder Überführungselektroden (14n, 14p, 15n, 15p) der ersten und der zweiten Scheibe (1, 2) voneinander unterscheiden.

6. Winkelencoder (100) nach auf Anspruch 5,
**dadurch gekennzeichnet, dass**
für eine sektorweise Zusammenführung der Koppelsignale (7) die Koppelsignale (7) mittels der Überführungselektroden (14n, 14p) sektorweise zusammengeführt sind, indem die erste Scheibe (1) pro Sektor (13a-13d) und Sensorring (3, 4) je eine Überführungselektroden (14n, 14p) pro Sorte (n, p) der zweiten Koppelelektroden (6a, 6i, 6p, 6n) aufweist, insbesondere wobei jede Überführungselektroden (15n, 15p) eines Sensorrings (3, 4) der zweiten Scheibe (2) mit Sequenzen (6n, 16p) zirkular benachbarter zweiten Koppelelektroden (6a, 6i, 6p, 6n) gleicher Sorte (n, p) elektrisch leitend verbunden ist, wobei im Speziellen die zirkulare Ausdehnung einer solchen Sequenz der zirkularen Ausdehnung eines ersten bzw. zweiten P-Intervalls (8, 9, 9a) entspricht.

7. Winkelencoder (100) nach einem der vorherigen Ansprüche,
**dadurch gekennzeichnet, dass**
der Winkelencoder (100) für wenigstens einen Sensorring (3, 4) für die differentielle Signalauswertung wenigstens einen ersten und einen zweiten Signalwandler, insbesondere einen Analog-Digital-Konverter (ADC1, ADC2), aufweist welcher jeweils mit ersten oder zweiten Koppelelektroden (6a, 6i, 6p, 6n) wenigstens eines Sektors (13a-13d) und einer Sorte (n, p) mittelbar oder unmittelbar verbunden ist, wobei mittels Schalter die Verbindung der zweiten Koppelelektroden (6a, 6i, 6p, 6n) sektorweise und sortenweise vom ersten auf den zweiten Signalwandler oder umgekehrt vertauschbar ist.

8. Winkelencoder (100) nach einem der vorherigen Ansprüche,
**dadurch gekennzeichnet, dass**
zur Robustheit gegenüber Exzentrizitäten der ersten und/oder zweiten Scheibe (1, 2) sich die radiale Erstreckung der ersten Koppelelektroden (5a, 5i, 5R-5U) von der radialen Erstreckung der mit ihnen koppelnden zweiten Koppelelektroden (6a, 6i, 6p, 6n) unterscheidet, insbesondere wobei die radiale Erstreckung der zweiten Koppelelektroden (6a, 6i, 6p, 6n) grösser ist als diejenige der ersten Koppelelektroden (5a, 5i, 5R-5U),
und/oder
die ersten und/oder zweiten Koppelelektroden (5a, 5i, 5R-5U, 6a, 6i, 6p, 6n) von, insbesondere einem Ring aus, wenigstens einer elektrisch abschirmenden Schutzelektrode (17) umgeben sind,
und/oder
die ersten und/oder zweiten Koppelelektroden (5a, 5i, 5R-5U, 6a, 6i, 6p, 6n) derart geformt sind, dass durch eine Rotation der ersten Scheibe (1) gegenüber der zweiten Scheibe (2) ein sinusförmiger Verlauf der kapazitiven Kopplung generiert wird, und direkt benachbarte erste Koppelelektroden (5a, 5i, 5R-5U)
• gegensinnig radial ausgerichtet sind und
• dergestalt unterschiedlich geformt wird, dass die durch die gegensinnige Ausrichtung bedingte unterschiedliche radiale Lage direkt benachbarter erster Koppelelektroden (5a, 5i, 5R-5U) kompensiert ist.

9. Verfahren zum Bestimmen von Winkeln unter Verwendung eines Winkelencoders (100) nach Anspruch 1
mit
• Ansteuern der ersten Koppelelektroden (5a, 5i, 5R-5U) oder zweiten Koppelektroden (6a, 6i, 6p, 6n) mit zeitlich sich ändernden Koppelsignalen (7),
• differentiellem Signalauswerten der zwischen den ersten und zweiten Koppelelektroden (5a, 5i, 5R-5U, 6a, 6i, 6p, 6n) übertragenen Koppelsignalen (7),
• absoluten Bestimmen des Winkels, indem Mehrdeutigkeiten, welche sich durch das differentielle Signalauswerten von Koppelsignalen (7) eines einzelnen Sensorrings (3, 4) ergeben,
durch das differentielle Signalauswerten der Koppelsignale (7) sowohl des ersten Sensorrings (3) als auch des zweiten Sensorrings (4) aufgrund der Teilerfremdheit der ersten Alpha-Intervall-Gesamtzahl (N1) und der zweiten Alpha-Intervall-Gesamtzahl (N1) aufgelöst werden.

10. Verfahren nach Anspruch 9,
**dadurch gekennzeichnet, dass**
das Signalauswerten dergestalt erfolgt, dass anhand von Koppelsignalen (7) des ersten Sensorrings (3) Schwachstellen in, insbesondere höherfrequenten und/oder hochfrequenten, Abschnitten des Fehlerspektrums (F2) des zweiten Sensorrings (4) kompensiert werden und/oder anhand von Koppelsignalen (7) des zweiten Sensorrings (4) Schwachstellen in, insbesondere höherfrequenten und/oder hochfrequenten, Abschnitten des Fehlerspektrums (F1) des ersten Sensorrings (3) kompensiert werden, insbesondere wobei beim Signalauswerten Signalamplituden berücksichtigt werden, wodurch Abweichungen der Formen oder Lagen der ersten und/oder zweiten Koppelelektroden (5a, 5i, 5R-5U, 6a, 6i, 6p, 6n) auf den Scheiben (3, 4) von Idealformen bzw. Ideallagen kompensiert werden.

11. Verfahren nach Anspruch 9 oder 10,
mit
• Ansteuern der ersten oder zweiten Koppelektroden (5a, 5i, 5R-5U, 6a, 6i, 6p, 6n) mit zeitlich sich ändernden Koppelsignalen (7),
• differentiellem Signalauswerten von Koppelsignalen (7),
• absoluten Bestimmen des Winkels anhand der zwischen den ersten und zweiten Koppelelektroden (5a, 5i, 5R-5U, 6a, 6i, 6p, 6n) übertragenen Koppelsignale (7) beider Sensorringe (3, 4),
• Kompensieren von, insbesondere durch Abweichung der Anordnung der ersten und/oder zweiten Scheibe (1, 2) von einer Ideallage relativ zur Messachse (50) bedingten niederfrequenten, Fehlern durch ein vergleichendes Auswerten von Koppelsignalen (7) unterschiedlicher Sektoren (13a-13d) und/oder
• Bestimmen der Abweichung der Anordnung der ersten und/oder zweiten Scheibe (1, 2) von einer Ideallage relativ zur Messachse (50).

12. Verfahren nach einem der Ansprüche 9 bis 11,
**dadurch gekennzeichnet, dass**
mittels Zeitmultiplexverfahren
• das Ansteuern der ersten oder zweiten Koppelelektroden (5a, 5i, 5R-5U, 6a, 6i, 6p, 6n) eines jeweiligen Sensorrings (3, 4) mit zeitlich sich ändernden Koppelsignalen (7) für unterschiedliche Koppelsignalphasen (R, S, T, U) zeitlich versetzt zueinander erfolgt, und/oder
• das Ansteuern der ersten oder zweiten Koppelektroden (5a, 5R-5U, 6a, 6p, 6n) mit zeitlich sich ändernden Koppelsignalen (7) des ersten Sensorrings (3) zeitlich versetzt zum Ansteuern der ersten oder zweiten Koppelektroden (5i, 5R-5U, 6i, 6p, 6n) mit zeitlich sich ändernden Koppelsignalen (7) des zweiten Sensorrings (4) erfolgt.

13. Verfahren nach einem der Ansprüche 9 bis 12,
**dadurch gekennzeichnet, dass**
jeder Sektor (13a-13d) separat ausgelesen wird, indem
• die zusammengeführten Koppelsignale (7) der zweiten Koppelelektroden (6a, 6i, 6p, 6n) eines jeden Sektors (13a-13d) an einen separaten Signalwandler, insbesondere einen Analog-Digital-Konverter, angelegt werden oder
• die zusammengeführten Koppelsignale (7) der zweiten Koppelelektroden (6a, 6i, 6p, 6n) verschiedener Sektoren (13a-13d) mittels eines Zeitmultiplexverfahrens zeitlich versetzt an einen gemeinsamen Signalwandler, insbesondere einen Analog-Digital-Konverter, angelegt werden, insbesondere wobei das Zusammenführen von Koppelsignalen (7) mittels Schalter sektorweise und sortenweise vertauschbar erfolgt.

14. Computerprogrammprodukt mit Programmcode, bei dessen Ausführung der Winkelencoder nach Anspruch 1 die Verfahrensschritte nach einem der Ansprüche 9 bis 13 ausführt.

15. Computerlesbarer Datenträger, auf dem das Computerprogrammprodukt nach Anspruch 14 gespeichert ist.

## Claims

1. Absolute capacitive rotary encoder (100), comprising
• a first sensor ring (3) and at least one second sensor ring (4), each comprising
∘ first coupling electrodes (5a, 5i, 5R-5U), more particularly emitter electrodes, arranged in a circular shape on a first disk (1), more particularly a stator disk, and aligned radially, and
∘ second coupling electrodes (6a, 6i, 6p, 6n), more particularly receiver electrodes, arranged in a circular shape on a second disk (2), more particularly a rotor disk, and aligned radially,
wherein
• the circular width of the first and second coupling electrodes (5a, 5i, 5R-5U, 6a, 6i, 6p, 6n) of a respective sensor ring (3, 4) are matched to one another,
• the first disk (1) and the second disk (2) are
∘ arranged coaxially on a measuring axis (50) and at a distance from one another and
∘ rotatable relative to one another about the measuring axis (50), wherein
∘ the distance between the first disk (1) and the second disk (2) is dimensioned in such a way that time-varying coupling signals (7) are transmittable between the first and second coupling electrodes (5a, 5i, 5R-5U, 6a, 6i, 6p, 6n) of a respective sensor ring (3, 4) by way of capacitive coupling, and
∘ an absolute angle is determinable by evaluating the coupling signals (7) of both sensor rings (3, 4) transmitted between the first and second coupling electrodes (5a, 5i, 5R-5U, 6a, 6i, 6p, 6n),
• the first coupling electrodes (5a, 5i, 5R-5U) have at least three mutually offset coupling signal phases (R, S, T, U), more particularly four coupling signal phases respectively offset by 90°, wherein
∘ respectively one alpha-interval (α) is defined on the basis of the number of coupling signal phases (R, S, T, U),
∘ a structure of the first coupling electrodes (5a, 5i, 5R-5U) is predetermined by the alpha-intervals (α),
∘ each sensor ring (3, 4) has an alpha-interval overall number (N1, N2) as the total of all alpha-intervals (α) of the respective sensor ring (3, 4),
• the second coupling electrodes (6a, 6i, 6p, 6n) are divided into at least two mutually alternate types (n, p) for a differential signal evaluation, wherein second coupling electrodes (6a, 6i, 6p, 6n), respectively spaced apart by one in the circular direction, of each sensor ring (3, 4) are of the same type (n, p,), and,
• in the case of at least one sensor ring (3, 4), the coupling signals (7) of the second coupling electrodes (6a, 6i, 6p, 6n) of a type of a sector (13a-13d) are brought together sector-by-sector, wherein
∘ the sectors (13a-13d) are distributed, more particularly uniformly, over the whole sensor ring (3, 4) and
∘ the number of sectors (13a-13d) is at least three, more particularly four,
such that information about a deviation of the arrangement of the first and/or second disk (1, 2) from an ideal location relative to the measuring axis (50) is establishable by a sector-related comparing evaluation of coupling signals (7) from different sectors (13a-13d), in particular wherein the number of second coupling electrodes (6a, 6i, 6p, 6n) is a mathematical multiple of the number of sectors (13a-13d).

2. Rotary encoder (100) according to Claim 1,
**characterized in that**,
by means of the information about a deviation of the arrangement of the first and/or second disk (1, 2) from an ideal location relative to the measuring axis (50),
• errors, more particularly low frequency errors, which are caused by a deviation of the arrangement of the first and/or second disk (1, 2) from an ideal location relative to the measuring axis (50), are compensatable and/or
• the deviation of the arrangement of the first and/or second disk (1, 2) from an ideal location relative to the measuring axis (50) is determinable.

3. Rotary encoder (100) according to Claim 1 or 2,
**characterized in that**
the coupling signals (7) of the second coupling electrodes (6a, 6i, 6p, 6n) of the same type (n, p) are combined sector-by-sector, respectively both in the first sensor ring (3) and in the second sensor ring (4), more particularly wherein
• the number of sectors (13a-13d) of the first sensor ring (3) differs from the number of sectors of the second sensor ring (4) and/or
• the sectors (13a-13d) of the first sensor ring (3) are arranged offset to the sectors of the second sensor ring (4), more particularly by 45° in the case of respectively four sectors (13a-13d) per sensor ring (3, 4),
and/or
the coupling signals (7) are combined sector-by-sector by virtue of the second coupling electrodes (6a, 6i, 6p, 6n) of the same type (n, p) of a respective sector (13a-13d) being connected in an electrically conductive manner on the second disk (2).

4. Rotary encoder (100) according to any one of the preceding claims,
**characterized in that**
the sequence of the first coupling electrodes (5a, 5R-5U) of the first sensor ring (3) and the sequence of the first coupling electrodes (5i, 5R-5U) of the second sensor ring (4) are matched to one another in such a way that weak points in the error spectra (F1, F2) of the two sensor rings (3, 4) compensate one another at least in portions, more particularly in relatively high frequency and/or high-frequency portions of the error spectra (F1, F2), in particular wherein
• the first alpha-interval overall number N1 and all multiples thereof are unequal to the second alpha-interval overall number N2 and all multiples thereof for the purposes of compensating the main lines of the error spectra (F1, F2), and/or
• secondary lines of the error spectra (F1, F2) likewise compensate one another, in particular wherein the error spectra (F1, F2) of the two sensor rings (3, 4) are orthogonal to one another, and/or
• the signal evaluation is implemented in such a way that high-harmonic error components are compensatable.

5. Rotary encoder (100) according to any one of the preceding claims,
**characterized in that**
the first disk (1) and the second disk (2), for the first and/or second sensor ring (3, 4), have transmission electrodes (14n, 14p, 15n, 15p) for transmitting the coupling signals (7) between the first and the second disk (1, 2), wherein
• each disk (1, 2) has at least one transmission electrode (14n, 14p, 15n, 15p) per type (n, p) of the second coupling electrodes (6a, 6i, 6p, 6n) for each sensor ring (3, 4),
• each transmission electrode (14n, 14p, 15n, 15p) of the first or second disk (1, 2) is connected in an electrically conductive manner to at least one first or second coupling electrode (5a, 5i, 5R-5U, 6a, 6i, 6p, 6n) and
• transmission electrodes (15n, 15p) of the first disk (1) are capacitively coupled to transmission electrodes (14n, 14p) of the second disk (2) of the same type (n, p) and of the same sensor ring (3, 4),
more particularly wherein
• ring-shaped transmission electrodes (14n, 14p, 15n, 15p), which extend over an angular range of 360°, have an electrically insulating break for avoiding electrical ring currents and/or
• the radial extent of mutually coupling transmission electrodes (14n, 14p, 15n, 15p) of the first and the second disk (1, 2) differ from one another for robustness in relation to eccentricities.

6. Rotary encoder (100) according to Claim 5,
**characterized in that**,
for combining the coupling signals (7) sector-by-sector, the coupling signals (7) are combined sector-by-sector by means of the transmission electrodes (14n, 14p) by virtue of the first disk (1) respectively having one transmission electrode (14n, 14p) per type (n, p) of the second coupling electrodes (6a, 6i, 6p, 6n) per sector (13a-13d) and sensor ring (3, 4), more particularly wherein each transmission electrode (15n, 15p) of a sensor ring (3, 4) of the second disk (2) is connected in an electrically conductive manner to sequences (6n, 16p) of circularly adjacent second coupling electrodes (6a, 6i, 6p, 6n) of the same type (n, p), wherein, specifically, the circular extent of such a sequence corresponds to the circular extent of a first or second P-interval (8, 9, 9a).

7. Rotary encoder (100) according to Claim 2 or 3,
**characterized in that**
the rotary encoder (100) for at least one sensor ring (3, 4) has at least a first and a second signal transducer, more particularly an analog-to-digital converter (ADC1, ADC2), for differential signal evaluation, which signal transducers are respectively connected directly or indirectly to the first or second coupling electrodes (6a, 6i, 6p, 6n) of at least one sector (13a-13d) and of one type (n, p), wherein, by means of switches, the connection of the second coupling electrodes (6a, 6i, 6p, 6n) is interchangeable from the first to the second signal transducer, or vice versa, in a sector-by-sector and type-by-type manner.

8. Rotary encoder (100) according to any one of the preceding claims,
**characterized in that**,
for the purposes of robustness in relation to eccentricities of the first and/or second disk (1, 2), the radial extent of the first coupling electrodes (5a, 5i, 5R-5U) differs from the radial extent of the second coupling electrodes (6a, 6i, 6p, 6n) coupling therewith, more particularly wherein the radial extent of the second coupling electrodes (6a, 6i, 6p, 6n) is greater than that of the first coupling electrodes (5a, 5i, 5R-5U), and/or
the first and/or second coupling electrodes (5a, 5i, 5R-5U, 6a, 6i, 6p, 6n) are surrounded by at least one electrically shielding protective electrode (17), more particularly by a ring thereof,
and/or
the first and/or second coupling electrodes (5a, 5i, 5R-5U, 6a, 6i, 6p, 6n) are formed in such a way that a rotation of the first disk (1) in relation to the second disk (2) generates a sinusoidal profile of the capacitive coupling, and directly adjacent first coupling electrodes (5a, 5i, 5R-5U)
• are aligned in an opposite radial manner and
• formed in such a different way that the different radial locations of directly adjacent first coupling electrodes (5a, 5i, 5R-5U) caused by the opposite alignment are compensated for.

9. Method for determining angles for a rotary encoder (100) according to Claim 1,
comprising
• an actuation of the first coupling electrodes (5a, 5i, 5R-5U) or second coupling electrodes (6a, 6i, 6p, 6n) with time-varying coupling signals (7),
• a differential signal evaluation of the coupling signals (7) transmitted between the first and second coupling electrodes (5a, 5i, 5R-5U, 6a, 6i, 6p, 6n),
• an absolute determination of the angle by virtue of ambiguities, which emerge from the differential signal evaluation of coupling signals (7) of an individual sensor ring (3, 4),
being resolved by the differential signal evaluation of the coupling signals (7) of both the first sensor ring (3) and the second sensor ring (4) as a result of the first alpha-interval overall number (N1) and the second alpha-interval overall number (N1) being co-prime.

10. Method according to Claim 9,
**characterized in that**
the signal evaluation is brought about in such a way that, on the basis of coupling signals (7) from the first sensor ring (3), weak points in portions of the error spectrum (F2) of the second sensor ring (4), more particularly in relatively high-frequency and/or high-frequency portions, are compensated for and/or, on the basis of coupling signals (7) from the second sensor ring (4), weak points in portions of the error spectrum (F1) of the first sensor ring (3), more particularly in relatively high-frequency and/or high-frequency portions, are compensated for, more particularly, wherein signal amplitudes are considered during the signal evaluation, as a result of which deviations of the forms or locations of the first and/or second coupling electrodes (5a, 5i, 5R-5U, 6a, 6i, 6p, 6n) on the disks (3, 4) from ideal forms or ideal locations are compensated for.

11. Method according to Claim 9 or 10, comprising:
• an actuation of the first or second coupling electrodes (5a, 5i, 5R-5U, 6a, 6i, 6p, 6n) with time-varying coupling signals (7),
• a differential signal evaluation of coupling signals (7),
• an absolute determination of the angle on the basis of the coupling signals (7) from both sensor rings (3, 4) transmitted between the first and second coupling electrodes (5a, 5i, 5R-5U, 6a, 6i, 6p, 6n),
• a compensation of errors, more particularly low-frequency errors caused by a deviation of the arrangement of the first and/or second disk (1, 2) from an ideal location relative to the measuring axis (50), by a comparative evaluation of coupling signals (7) from different sectors (13a-13d) and/or
• a determination of the deviation of the arrangement of the first and/or second disk (1, 2) from an ideal location relative to the measuring axis (50).

12. Method according to any one of Claims 9 to 11,
**characterized in that**,
by means of time multiplexing,
• the actuation of the first or second coupling electrodes (5a, 5i, 5R-5U, 6a, 6i, 6p, 6n) of a respective sensor ring (3, 4) with time-varying coupling signals (7) is brought about with a mutual time offset for different coupling signal phases (R, S, T, U), and/or
• the actuation of the first or second coupling electrodes (5a, 5R-5U, 6a, 6p, 6n) with time-varying coupling signals (7) from the first sensor ring (3) is brought about with a time offset from the actuation of the first or second coupling electrodes (5i, 5R-5U, 6i, 6p, 6n) with time-varying coupling signals (7) from the second sensor ring (4).

13. Method according to any one of Claims 9 to 12,
**characterized in that**
each sector (13a-13d) is read out separately by virtue of
• the combined coupling signals (7) from the second coupling electrodes (6a, 6i, 6p, 6n) of each sector (13a-13d) being applied to separate signal transducers, more particularly to analog-to-digital converters, or
• the combined coupling signals (7) from the second coupling electrodes (6a, 6i, 6p, 6n) of different sectors (13a-13d) being applied with a time offset by means of time multiplexing to a common signal transducer, more particularly to an analog-to-digital converter,
more particularly wherein the combination of coupling signals (7) by means of switches is brought about in an interchangeable sector-by-sector and type-by-type manner.

14. Computer program product comprising program code by execution of which the rotary encoder according to claim 1 executes the method steps according to any one of Claims 9 to 13.

15. Machine-readable medium on which the computer program product according to claim 14 is stored.

## Revendications

1. Codeur angulaire absolu capacitif (100) doté d'un premier anneau capteur (3) et d'au moins un deuxième anneau capteur (4), doté respectivement
∘ sur un premier disque (1), en particulier un disque de stator, de premières électrodes de couplage (5a, 5i, 5R-5U) agencées de manière circulaire et orientées radialement, en particulier des électrodes d'émetteur, et
∘ sur un deuxième disque (2), en particulier un disque de rotor, de deuxièmes électrodes de couplage (6a 6i, 6i, 6n) agencées de manière circulaire et orientées radialement, en particulier des électrodes de récepteur, et
dans lequel
• les largeurs circulaires des premières et deuxièmes électrodes de couplage (5a, 5i, 5R-5U, 6a, 6i, 6p, 6n) d'un anneau capteur (3, 4) respectif sont adaptées l'une à l'autre,
• le premier disque (1) et le deuxième disque (2)
∘ sont agencés de manière coaxiale et écartés l'un de l'autre sur un axe de mesure (50) et
∘ peuvent tourner autour de l'axe de mesure (50) l'un par rapport à l'autre, dans lequel
∘ l'écart du premier disque (1) par rapport au deuxième disque (2) est dimensionné de telle sorte que des signaux de couplage (7) variant au cours du temps peuvent être transmis par couplage capacitif entre les premières et deuxièmes électrodes de couplage (5a, 5i, 5R-5U, 6a, 6i, 6p, 6n) d'un anneau capteur (3, 4) respectif, et
∘ un angle peut être déterminé de manière absolue par exploitation des signaux de couplage (7) des deux anneaux capteur (3, 4) entre les premières et deuxièmes électrodes de couplage (5a, 5i, 5R-5U, 6a, 6i, 6p, 6n),
• les premières électrodes de couplage (5a, 5i, 5R-5U) comportent au moins trois, en particulier quatre phases de signal de couplage (R, S, T, U) respectivement décalées de 90° l'une par rapport à l'autre, dans lequel
∘ un intervalle alpha (α) est respectivement défini à l'aide du nombre des phases de signal de couplage (R, S, T, U),
∘ une organisation des premières électrodes de couplage (5a, 5i, 5R-5U) est prédéfinie par les intervalles alpha (α) et
∘ chaque anneau capteur (3, 4) comporte un nombre total d'intervalles alpha (N1, N2) en tant que nombre de tous les intervalles alpha (α) des anneaux capteur respectifs (3, 4),
• les deuxièmes électrodes de couplage (6a 6i, 6i, 6n) sont réparties en au moins deux variétés réciproques l'une à l'autre (n, p) pour une exploitation différentielle des signaux, dans lequel des deuxièmes électrodes de couplage (6a 6i, 6i, 6n) de chaque anneau capteur (3, 4) respectivement deux crans après dans la direction circulaire sont de la même variété (n, p), et
• pour au moins un anneau capteur (3, 4) les signaux de couplage (7) des deuxièmes électrodes de couplage (6a 6i, 6i, 6n) d'une variété d'un secteur (13a-13d) sont fusionnés par secteur, dans lequel
∘ les secteurs (13a-13d) se répartissent, en particulier uniformément, sur la totalité de l'anneau capteur (3, 4) et
∘ le nombre de secteurs (13a-13d) est d'au moins trois, en particulier quatre,
de sorte que par une analyse comparative par secteur des signaux de couplage (7) de différents secteurs (13a-13d), des informations sur une déviation de l'arrangement du premier et/ou du deuxième disque (1, 2) par rapport à une position idéale relativement à l'axe de mesure (50) peuvent être déterminées, en particulier dans lequel le nombre des deuxièmes électrodes de couplage (6a 6i, 6i, 6n) est un multiple mathématique du nombre des secteurs (13a-13d).

2. Codeur angulaire (100) selon la revendication 1,
**caractérisé en ce que**
au moyen des informations sur une déviation de l'arrangement du premier et/ou du deuxième disque (1, 2) par rapport à une position idéale relativement à l'axe de mesure (50),
• des erreurs, en particulier de basse fréquence, lesquelles sont conditionnées par déviation de l'arrangement du premier et/ou du deuxième disque (1, 2) par rapport à une position idéale relativement à l'axe de mesure (50), sont compensables et/ou
• la déviation de l'arrangement du premier et/ou du deuxième disque (1, 2) par rapport à une position idéale relativement à l'axe de mesure (50) est déterminable.

3. Codeur angulaire (100) selon la revendication 1 ou 2,
**caractérisé en ce que**
aussi bien pour le premier anneau capteur (3) que pour le deuxième anneau capteur (4) les signaux de couplage (7) des deuxièmes électrodes de couplage (6a 6i, 6i, 6n) de même variété (n, p) sont fusionnés par secteur, en particulier dans lequel
• le nombre des secteurs (13a-13d) du premier anneau capteur (3) diffère du nombre des secteurs du deuxième anneau capteur (4) et/ou
• les secteurs (13a-13d) du premier anneau capteur (3) sont agencés en décalage par rapport aux secteurs du deuxième anneau capteur (4), en particulier de 45° en cas de quatre secteurs (13a-13d) par anneau capteur (3, 4),
et/ou
les signaux de couplage (7) sont fusionnés par secteur, les deuxièmes électrodes de couplage (6a 6i, 6i, 6n) de même variété (n, p) étant reliées de manière électriquement conductrice à un secteur respectif (13a-13d) sur le deuxième disque (2).

4. Codeur angulaire (100) selon l'une des revendications précédentes,
**caractérisé en ce que**
la succession des premières électrodes de couplage (5a, 5i, 5R-5U) du premier anneau capteur (3) et la succession des premières électrodes de couplage (5a, 5i, 5R-5U) du deuxième anneau capteur (4) sont adaptées l'une à l'autre de telle sorte que les lacunes dans les spectres d'erreurs (F1, F2) des deux bagues de détection (F1, F2) se compensent mutuellement, au moins partiellement, en particulier dans les sections à plus haute fréquence et/ou à haute fréquence des spectres d'erreurs (F1, F2), en particulier dans lequel
• le premier nombre total d'intervalle alpha N1 et tous ses multiples sont différents du deuxième nombre total d'intervalle alpha N1 et de tous ses multiples afin de compenser les lignes principales des spectres d'erreurs (F1, F2), et/ou
• les lignes secondaires des spectres d'erreurs (F1, F2) se compensent également mutuellement, en particulier dans lequel les spectres d'erreurs (F1, F2) des deux anneaux capteur (3, 4) sont orthogonaux l'un à l'autre, et/ou
• l'exploitation des signaux s'effectue de telle façon que les fractions d'erreur harmoniques élevées sont compensables.

5. Codeur angulaire (100) selon l'une des revendications précédentes,
**caractérisé en ce que**
le premier disque (1) et le deuxième disque (2) comportent pour le premier et/ou le deuxième anneau capteur (3, 4) des électrodes de transfert (14n, 14p, 15n, 15p) afin de transférer les signaux de couplage (7) entre le premier et le deuxième disque (1, 2), dans lequel
• chaque disque (1, 2) comporte par anneau capteur (3, 4) au moins une électrode de transfert (14n, 14p, 15n, 15p) par variété (n, p) des deuxièmes électrodes de couplage (6a 6i, 6i, 6n)
• chaque électrode de transfert (14n, 14p, 15n, 15p) du premier ou du deuxième disque (1, 2) est reliée de manière électriquement conductrice à au moins une première ou deuxième électrode de couplage (5a, 5i, 5R-5U, 6a, 6i, 6p, 6n), et
• les électrodes de transfert (15n, 15p) du premier disque (1) couplent de manière capacitive avec les électrodes de transfert (14n, 14p) du deuxième disque (2) de même variété (n, p) et de même anneau capteur (3, 4),
en particulier dans lequel
• des électrodes de transfert (14n, 14p, 15n, 15p) annulaires, lesquelles s'étendent sur un secteur angulaire de 360°, comportent une interruption électriquement isolante afin de prévenir les courants électriques annulaires et/ou
• pour la robustesse contre les excentricités, les étendue radiales des électrodes de transfert (14n, 14p, 15n, 15p) couplant l'une avec l'autre du premier et du deuxième disque diffèrent l'une de l'autre.

6. Codeur angulaire (100) selon la revendication 5,
**caractérisé en ce que**
pour une fusion par secteur des signaux de couplage (7), les signaux de couplage (7) sont fusionnés par secteur au moyen des électrodes de transfert (14n, 14p), le premier disque (1) comportant par secteur (13a-13d) et par anneau capteur (3, 4) respectivement une électrode de transfert (14n, 14p) par variété (n, p) de deuxième électrode de couplage (6a, 6i, 6p, 6n), en particulier dans lequel chaque électrode de transfert (15n, 15p) d'un anneau capteur (3, 4) du deuxième disque (2) est relié de manière électriquement conductrice à des séquences (6n, 16p) de deuxièmes électrodes de couplage (6a, 6i, 6p, 6n) circulairement adjacentes de même variété (n, p), dans lequel, spécialement, l'étendue circulaire d'une telle séquence correspond à l'étendue circulaire d'un premier ou respectivement deuxième intervalle P (8, 9, 9a).

7. Codeur angulaire (100) selon l'une des revendications précédentes,
**caractérisé en ce que**
le codeur angulaire (100) comporte pour au moins un anneau capteur (3, 4) au moins un premier et un deuxième convertisseur de signal, en particulier un convertisseur analogique-numérique (ADC1, ADC2), lequel est relié respectivement à des premières ou deuxièmes électrodes de couplage (6a, 6i, 6p, 6n) d'au moins un secteur (13a-13d) et d'une variété (n, p) directement ou indirectement, dans lequel, au moyen d'un commutateur, le raccordement des deuxièmes électrodes de couplage (6a, 6i, 6p, 6n) peut être interverti par secteur et par variété du premier au deuxième convertisseur de signal ou inversement.

8. Codeur angulaire (100) selon l'une des revendications précédentes,
**caractérisé en ce que**
pour la robustesse contre les excentricités du premier et/ou du deuxième disque (1, 2), l'étendue radiale des premières électrodes de couplage (5a, 5i, 5R-5U) diffère de l'étendue radiale des deuxièmes électrodes de couplage (6a, 6i, 6p, 6n) couplées à celles-ci, en particulier dans lequel l'étendue radiale des deuxièmes électrodes de couplage (6a, 6i, 6p, 6n) est plus grande que celle des premières électrodes de couplage (5a, 5i, 5R-5U), et/ou les premières et/ou deuxièmes électrodes de couplage (5a, 5i, 5R-5U, 6a, 6i, 6p, 6n) sont entourées par au moins une électrode protectrice (17) de blindage électrique, en particulier un anneau de celle-ci,
et/ou
les premières et/ou deuxièmes électrodes de couplage (5a, 5i, 5R-5U, 6a, 6i, 6p, 6n) sont formées de telle sorte qu'une courbe sinusoïdale de couplage capacitif est générée par la rotation du premier disque (1) par rapport au deuxième disque (2), et les premières électrodes de couplage (5a, 5i, 5R-5U) directement adjacentes
• sont orientées en sens inverse dans le sens radial
• sont formées différemment de telle manière que la position radiale différente premières électrodes de couplage (5a, 5i, 5R-5U) directement adjacentes conditionnée par l'orientation en sens inverse est compensée.

9. Procédé de détermination d'angles par utilisation d'un codeur angulaire (100) selon la revendication 1 avec
• commande des premières électrodes de couplage (5a, 5i, 5R-5U) ou des deuxièmes électrodes de couplage (6a, 6i, 6p, 6n) avec des signaux de couplage (7) variant au cours du temps,
• exploitation différentielle des signaux de couplage (7) transmis entre les premières et deuxièmes électrodes de couplage (5a, 5i, 5R-5U, 6a, 6i, 6p, 6n), détermination absolue de l'angle, des ambiguïtés,
• lesquelles surviennent en raison de l'exploitation différentielle des signaux de couplage (7) d'un unique anneau capteur (3, 4),
sont résolues par l'exploitation différentielle des signaux de couplage (7) aussi bien du premier anneau capteur (3) que du deuxième anneau capteur (4) en raison de la coprimalité du premier nombre total d'intervalles alpha (N1) et du deuxième nombre total d'intervalles alpha (N1).

10. Procédé selon la revendication 9,
**caractérisé en ce que**
l'exploitation des signaux s'effectue de telle sorte que, à l'aide des signaux de couplage (7) du premier anneau capteur (3), des lacunes dans les sections, en particulier à plus haute fréquence et/ou à haute fréquence, du spectre d'erreurs (F2) du deuxième anneau capteur (4) sont compensées et/ou à l'aide des signaux de couplage (7) du deuxième anneau capteur (4), des lacunes dans les sections, en particulier à plus haute fréquence et/ou à haute fréquence, du spectre d'erreurs (F1) du premier anneau capteur (3) sont compensées, en particulier dans lequel les amplitudes des signaux sont prises en compte lors de l'exploitation des signaux, où des déviations des formes ou des positions des premières et/ou deuxièmes électrodes de couplage (5a, 5i, 5R-5U, 6a, 6i, 6p, 6n) sur les disques (3, 4) par rapport à des formes idéales ou respectivement des positions idéales sont compensées.

11. Procédé selon la revendication 9 ou 10,
avec
• commande des premières ou des deuxièmes électrodes de couplage (5a, 5i, 5R-5U, 6a, 6i, 6p, 6n) avec des signaux de couplage (7) variant au cours du temps,
• exploitation différentielle des signaux de couplage (7),
• détermination absolue à l'aide des signaux de couplage (7) des deux anneaux capteurs (3, 4) entre les premières et deuxièmes électrodes de couplage (5a, 5i, 5R-5U, 6a, 6i, 6p, 6n),
• compensation des erreurs, en particulier de basse fréquence conditionnées par déviation de l'agencement du premier et/ou du deuxième disque (1, 2) par rapport à une position idéale relativement à l'axe de mesure (50), par une analyse comparative des signaux de couplage (7) de différents secteurs (13a-13d) et/ou
• détermination de la déviation de l'arrangement du premier et/ou du deuxième disque (1, 2) par rapport à une position idéale relativement à l'axe de mesure (50).

12. Procédé selon l'une des revendications 9 à 11,
**caractérisé en ce que**
au moyen d'un procédé de multiplexage temporel
• la commande des premières ou deuxièmes électrodes de couplage (5a, 5i, 5R-5U, 6a, 6i, 6p, 6n) d'un anneau capteur respectif (3, 4) s'effectue avec un décalage temporel l'une par rapport à l'autre avec des signaux de couplage (7) variant dans le temps pour différentes phases de signal de couplage (R, S, T, U), et/ou
• la commande des premières ou deuxièmes électrodes de couplage (5a, 5i, 5R-5U, 6a, 6i, 6p, 6n) avec des signaux de couplage (7) variant dans le temps du premier anneau capteur (3) s'effectue de manière décalée dans le temps par rapport à la commande des premières ou deuxièmes électrodes de couplage (5a, 5i, 5R-5U, 6a, 6i, 6p, 6n) avec des signaux de couplage (7) variant dans le temps du deuxième anneau capteur (4).

13. Procédé selon l'une des revendications 9 à 12,
**caractérisé en ce que**
chaque secteur (13a-13d) est lu séparément, où
• les signaux de couplage fusionnés (7) des deuxièmes électrodes de couplage (6a, 6i, 6p, 6n) de chaque secteur (13a-13d) sont appliqués à un convertisseur de signal séparé, en particulier un convertisseur analogique-numérique ou
• les signaux de couplage fusionnés (7) des deuxièmes électrodes de couplage (6a, 6i, 6p, 6n) de différent secteurs (13a-13d) sont appliqués de manière décalée dans le temps à un convertisseur de signal commun au moyen d'un procédé de multiplexage temporel,
en particulier un convertisseur analogique-numérique, en particulier dans lequel la fusion des signaux de couplage (7) s'effectue par secteur et par variété de manière interchangeable au moyen d'un commutateur.

14. Produit-programme informatique doté de code informatique, lors de l'exécution duquel le codeur angulaire selon la revendication 1 exécute les étapes de procédé selon l'une des revendications 9 à 13.

15. Support de données lisible par ordinateur sur lequel est enregistré le produit-programme informatique selon la revendication 14.
